# EUROPEAN PATENT SPECIFICATION

(11) **EP 1 515 165 B1**
(45) Date of publication and mention of the grant of the patent: **22.08.2007**
(21) Application number: 04255408.9
(22) Date of filing: 07.09.2004
(51) Int. Cl.: G02B 5/20, G02B 5/22, G02F 1/1335

(54) **Color filter substrate, manufacturing method thereof, electro-optical device, and electronic device**
Farbfiltersubstrat, Verfahren zu dessen Herstellung, elektro-optische Vorrichtung und elektronisches Gerät
Substrat de filtre coloré, procédé de sa fabrication, dispositif électro-optique et appareil électronique

(30) Priority: 10.09.2003 JP 2003318446
(43) Date of publication of application: 16.03.2005
(73) Proprietor: SEIKO EPSON CORPORATION, Tokyo 160-0811 (JP)
(72) Inventor: Katagami, Satoru, Suwa-shi Nagano-ken 392-8502 (JP); Maruyama, Kunio, Suwa-shi Nagano-ken 392-8502 (JP); Sakurada, Kazuaki, Suwa-shi Nagano-ken 392-8502 (JP); Aruga, Hisashi, Suwa-shi Nagano-ken 392-8502 (JP); Hiruma, Kei, Suwa-shi Nagano-ken 392-8502 (JP); Kawase, Tomomi, Suwa-shi Nagano-ken 392-8502 (JP)
(74) Representative: Sturt, Clifford Mark

(56) References cited:
- US-A1- 2003 001 992
- US-A1- 2003 063 239
- PATENT ABSTRACTS OF JAPAN vol. 2003, no. 08, 6 August 2003 (2003-08-06) -& JP 2003 121635 A (SEIKO EPSON CORP), 23 April 2003 (2003-04-23)
- PATENT ABSTRACTS OF JAPAN vol. 2002, no. 02, 2 April 2002 (2002-04-02) -& JP 2001 281648 A (OPTREX CORP), 10 October 2001 (2001-10-10)
- PATENT ABSTRACTS OF JAPAN vol. 2000, no. 13, 5 February 2001 (2001-02-05) & JP 2000 298271 A (MATSUSHITA ELECTRIC IND CO LTD), 24 October 2000 (2000-10-24)

## Description

The present invention relates to a color filter substrate for use in liquid crystal devices and other such electro-optical devices, and to a method of manufacturing such color filter substrate. The present invention also relates to an electro-optical device having such color filter substrate. The present invention further relates to electronic devices such as a portable phone, a portable information terminal, or other electronic devices configured to use such electro-optical device.

It is common in conventional practice for color to be displayed by a liquid crystal device, an organic EL device, or other such electro-optical device. A color filter substrate is incorporated into the interior of such electro-optical device. This color filter substrate is formed, for example, by forming three coloring elements of R (red), G (green), and B (blue) on a base made of transparent glass so that they form a predetermined pattern.

The following three types of liquid crystal devices are known. The first is a so-called reflective liquid crystal device wherein sunlight, artificial light, or other such external light is reflected in the interior of the device, and an image is displayed using the reflected light. The second is a so-called transmissive liquid crystal device wherein an image is displayed using light that is emitted from a cold cathode tube, an LED (light emitting diode), or another such light source, and that permeates the interior of the liquid crystal device. The third is a semi-transmissive/reflective liquid crystal device that has both reflective and transmissive functions. One display dot area in this semi-transmissive/reflective liquid crystal device is provided with a reflective portion having a reflective function and a transmissive portion having a transmissive function, such that it is possible to select between a reflective display mode and a transmissive display mode as desired.

One conventionally known example of the above-described semi-transmissive/reflective liquid crystal device is a device wherein each area corresponding to one display dot is partitioned off by a bank, and a coloring element is formed in this partitioned-off area using a droplet discharge technology, or, specifically, an inkjet technology. Such liquid crystal device is shown on page 4, Figure 1 of Japanese Laid-Open Patent Application No. 2003-121635.

In the liquid crystal device disclosed in Japanese Laid-Open Patent Application No. 2003-121635, the bank is provided to partition off the coloring elements. In other words, no special barrier wall is provided between the reflective portion and the transmissive portion. Therefore, coloring elements are provided from the same color materials in the reflective portion and the transmissive portion. However, there has recently been a demand for modifying the characteristics of the coloring elements in the reflective portion and the transmissive portion. For example, there has been a need to separately select the state of the coloring elements in the reflective portion and the state of the coloring elements in the transmissive portion in order to make the color display uniform between the reflective display mode and the transmissive display mode.

In spite of such demands, the same color materials are used for the coloring elements between the reflective portion and the transmissive portion in conventional liquid crystal devices. Therefore, it has been difficult to have variation in the state of the coloring elements between the reflective portion mode and the transmissive portion mode.

In view of the above, it will be apparent to those skilled in the art from this disclosure that there exists a need for an improved color filter substrate and method of manufacturing color filter substrate that overcome the above-described problems of the conventional art. This invention addresses this need in the art as well as other needs, which will become apparent to those skilled in the art from this disclosure.

US 2003/0063239A discloses a colour filter substrate in which each pixel is surrounded by a first bank. Within the first bank, there is provided a reflective area, in which a reflective film is disposed, and a transmissive area, in which there is no reflective film. The reflective area is formed around the boundary of the pixel and the transmissive area is surrounded by the reflective area. A second bank is formed on the reflective film at the boundary between the reflective area and the transmissive area. Thus, the second bank is formed entirely within the first bank and surrounds the transmissive area.

An object the present invention is to provide a color filter substrate wherein the attributes of coloring elements or other elements can be freely set at different values in the reflective portion and the transmissive portion, and also to provide a method of manufacturing such color filter substrate, an electro-optical device having such color filter substrate, and an electronic device having such electro-optical device.

According to a first aspect of the present invention, there is provided a color filter substrate, comprising:
a substrate;
a plurality of display dots on the substrate
first strip-shaped banks for partitioning off the display dots into different colours;
second strip-shaped banks, each of the second banks intersecting with a plurality of the first banks;
a reflective film partially provided on the substrate such that a reflective portion and a transmissive portion are formed in each of the display dots, the reflective film being provided only within and covering regions bounded by the first and second banks, and the second banks being provided between the reflective portions and the transmissive portions; and
coloring elements provided in areas divided by the first banks and the second banks.

According to another aspect of the present invention, there is provided a method of manufacturing a color filter substrate, comprising:
providing a substrate;
forming first and second strip-shaped banks on the substrate, the first banks for partitioning off display dots into different colours, and each of the second banks intersecting with a plurality of the first banks;
partially forming a reflective film such that a reflective portion and a transmissive portion are formed in each display dot, the reflective film being formed only within and covering regions bounded by the first and second banks; and
forming coloring elements on the areas divided by the first and second banks by droplet discharge.

These and other objects, features, aspects and advantages of the present invention will become apparent to those skilled in the art from the following detailed description, which, taken in conjunction with the annexed drawings, discloses a preferred embodiment of the present invention.

Embodiments of the present invention will now be described by way of further example only and with reference to the accompanying drawings, in which:-
Figure 1(a) is a plan view showing a single pixel area of a color filter substrate in accordance with the first embodiment of the present invention;
Figure 1(b) is a cross sectional view of the single pixel area of the color filter substrate shown in Figure 1(a) in accordance with the first embodiment of the present invention;
Figure 2 is a process diagram showing an embodiment of a method for manufacturing the color filter substrate in Figure 1 in accordance with the first embodiment of the present invention;
Figure 3 is a diagram showing the steps of manufacturing a color filter substrate in accordance with the process diagram in Figure 2 in accordance with the first embodiment of the present invention;
Figure 4 is a diagram showing the steps of manufacturing a color filter substrate in accordance with the first embodiment of the present invention continued from Figure 3;
Figure 5 is a diagram showing the steps of manufacturing a color filter substrate in accordance with the first embodiment of the present invention continued from Figure 4;
Figure 6(a) is a plan view showing a single pixel area of an element-side substrate in a liquid crystal device, which is an example of an electro-optical device in accordance with the present invention;
Figure 6(b) is a cross-sectional view along line VIb-VIb in Figure 6(a);
Figure 7 is a perspective view showing the liquid crystal device, which is an embodiment of the electro-optical device in accordance with the present invention;
Figure 8 is a diagram showing an enlarged view of the cross-sectional structure of a display dot area in the liquid crystal device in Figure 7;
Figure 9 is a perspective view showing a switching component used in the liquid crystal device in Figure 7;
Figure 10 is a diagram showing an example of the array pattern for the coloring elements R, G, and B formed on the color filter substrate in Figure 1; (a) being a striped pattern; (b) being a mosaic pattern; (c) being a delta pattern;
Figure 11(a) is a plan view showing a single pixel area of a color filter substrate in accordance with the second embodiment of the present invention;
Figure 11(b) is a cross sectional view of the single pixel area of the color filter substrate shown in Figure 11(a) in accordance with the second embodiment of the present invention;
Figure 12 is a process diagram showing an embodiment of a method for manufacturing the color filter substrate in Figure 11 in accordance with the second embodiment of the present invention;
Figure 13 is a diagram showing the steps of manufacturing a color filter substrate in accordance with the process diagram in Figure 12 in accordance with the second embodiment of the present invention;
Figure 14 is a diagram showing the steps of manufacturing a color filter substrate in accordance with the second embodiment of the present invention continued from Figure 13;
Figure 15 is a diagram showing the steps of manufacturing a color filter substrate in accordance with the second embodiment of the present invention continued from Figure 14;
Figure 16 is a process diagram showing a method for manufacturing the color filter substrate in Figure 1 in accordance with the third embodiment of the present invention;
Figure 17 is a diagram showing the steps of manufacturing a color filter substrate in accordance with the process diagram in Figure 16 in accordance with the third embodiment of the present invention;
Figure 18 is a diagram showing the steps of manufacturing a color filter substrate in accordance with the third embodiment of the present invention continued from Figure 17;
Figure 19 is a diagram showing the steps of manufacturing a color filter substrate in accordance with the first embodiment of the present invention continued from Figure 18;
Figure 20(a) is a plan view showing a single pixel area of a color filter substrate in accordance with the fourth aspect of the present invention;
Figure 20(b) is a cross sectional view of the single pixel area of the color filter substrate shown in Figure 20(a) in accordance with the fourth embodiment of the present invention;
Figure 21 is a perspective view showing an inkjet head used in the method for manufacturing a color filter substrate in accordance with the present invention;
Figure 22 is an exploded perspective view showing the internal structure of the inkjet head in Figure 21;
Figure 23 is a cross-sectional view along line XXIII-XXIII in Figure 22;
Figure 24 is a block diagram showing the electronic device in accordance with the fifth embodiment of the present invention;
Figure 25 is a perspective view showing a portable phone, which is the electronic device in accordance with the fifth embodiment of the present invention; and
Figure 26 is a perspective view showing a digital camera, which is the electronic device in accordance with the fifth embodiment of the present invention.

A color filter substrate in accordance with the present invention includes a substrate, a first bank for partitioning off a plurality of display dots on the substrate, a reflective film partially provided on the substrate such that a reflective portion and a transmissive portion are formed in each of the display dots, a second bank provided between the reflective portion and the transmissive portion; and coloring elements provided in areas divided by the first bank and second bank.

The reflective portion is an area where the reflective film is disposed. Also, the transmissive portion is an area in the display dot where the reflective film is not provided, where only a thin part of the reflective film is provided, or the like. Light rays coming from the front of the color filter substrate are reflected back to the front by the reflective portion. Also, light rays coming from the back of the color filter substrate are transmitted to the front through the transmissive portion. The coloring elements include, for example, the three colors R (red), G (green), and B (blue), or the three colors C (cyan), M (magenta), and Y (yellow). Light rays having a predetermined wavelength are selectively allowed to permeate when the reflected light rays or transmitted light rays pass through the coloring elements.

The coloring elements are provided to areas divided by the first bank and second bank. Since the second bank is provided to the border between the reflective portion and the transmissive portion, the coloring elements are divided between the reflective portion and the transmissive portion by the second bank. The attributes of the coloring elements or other elements such as the reflective film, can thereby be freely varied between the reflective portion and the transmissive portion.

In the color filter substrate configured as described above, the coloring elements are preferably formed using droplet discharge, or, specifically, an inkjet technique. Since the reflective portion and the transmissive portion in the present invention are divided by the second bank, the coloring elements are formed between the reflective portion and the transmissive portion each having its own attributes. The inkjet technique used herein is a technique by which the material of the coloring elements is discharged from a nozzle as ink droplets and is sprayed onto desired locations. Possible ink discharge methods that can be employed include a method by which ink is discharged through varying the internal capacity of the nozzle using a piezoelectric element that vibrates according to electric conduction, a method in which the ink discharge is accomplished by subjecting the ink in the nozzle to thermal expansion, or other droplet discharge techniques. If the inkjet technique is used, the coloring elements can be formed inexpensively and with a simpler procedure in comparison with the case where the coloring elements are formed with conventional methods such as photolithography techniques.

In the color filter substrate configured as described above, two adjacent coloring elements divided by the second bank preferably have the same color but different light transmittances. The brightness and color depth can thereby be adjusted easily between the light rays reflected by the reflective portion and the light rays transmitted by the transmissive portion.

Alternatively, in the color filter substrate configured as described above, two adjacent coloring elements divided by the second bank preferably have the same color but have different film thicknesses. The brightness and color depth can thereby be adjusted easily between the light rays reflected by the reflective portion and the light rays transmitted by the transmissive portion.

Alternatively, in the color filter substrate configured as described above, two adjacent coloring elements divided by the second bank preferably have different colors and different film thicknesses. The brightness and color depth can thereby be adjusted easily between the light rays reflected by the reflective portion and the light rays transmitted by the transmissive portion.

The color filter substrate configured as described above preferably has a resin layer provided between the substrate and the reflective film in the areas divided by the second bank. The resin layer is formed by droplet discharge and has an irregular pattern on its surface. According to this configuration, an irregular pattern is also formed in the reflective film in accordance with the irregular portion formed in the surface of the resin layer. As a result of having this irregular portion in the reflective film, reflected light rays are scattered and the quality of the reflective display improves. When the resin layer is used in this manner, the irregular portion is easily formed in the resin layer if the second bank is provided between the reflective portion and the transmissive portion, as in the present invention.

In the color filter substrate having a resin layer, the irregular portion is preferably formed by forming the resin layer by discharging a material containing beads. According to this configuration, the resin layer and the irregular portion can be simultaneously formed by a single droplet discharge.

In the color filter substrate having a resin layer, the irregular portion is preferably formed by forming the resin layer with droplet discharge and forming wrinkles on the resin layer through baking. The resin discharged in droplets is generally dried by baking. An irregular portion can be formed on the surface of the resin layer by utilizing this baking treatment. In this case, the irregular portion can be stably formed if the area onto which the resin layer is discharged is partitioned off by the second bank.

In the color filter substrate in accordance with the present invention, the reflective film is preferably formed by droplet discharge in the areas partitioned off by the second bank. In conventional practice, the reflective film is often formed by photolithography. However, the reflective film can easily be formed solely in the reflective portion by droplet discharge if the reflective portion and the transmissive portion are partitioned off by the second bank, as in the present invention.

In the color filter substrate wherein the reflective film is formed by droplet discharge, the reflective film is preferably formed by discharging a material containing beads. An irregular portion can thereby be formed on the surface of the reflective film by the reflective film itself even if there is no resin layer underneath the reflective film.

A method of manufacturing a color filter substrate in accordance with the present invention includes providing a substrate; forming first and second banks on the substrate, the first bank partitioning off display dots; forming a reflective film on areas divided by the first and second banks partially such that a reflective portion and a transmissive portion are formed in each display dot; and forming coloring elements on the areas divided by the first and second banks by droplet discharge. According to this manufacturing method, a color filter substrate with the configuration described above can be reliably manufactured.

The method of manufacturing a color filter substrate in accordance with the present invention preferably includes forming a resin layer on the substrate such that the resin layer has an irregular portion on its surface. In the forming of the first and second banks, the first and second banks are formed simultaneously after the forming of the resin layer. The reflective film is formed by droplet discharge after the forming of the first and second banks. The coloring elements are formed after the forming of the reflective film.

According to the method for manufacturing a color filter substrate with this configuration, the steps can be simplified because the first bank and second bank are formed in a single bank formation step. Also, since the coloring elements are formed by droplet discharge and the reflective film is also formed by droplet discharge, the steps can be even more simplified than when they are formed by photolithography.

Alternatively, the method of manufacturing a color filter substrate in accordance with the present invention preferably includes forming a resin layer on the substrate after the forming of the first and second banks such that the resin layer has an irregular portion on its surface. In the forming of the first and second banks, the first and second banks are formed simultaneously. The reflective film is formed by droplet discharge after the forming of the resin layer. The coloring elements are formed after the forming of the reflective film.

According to the method of manufacturing a color filter substrate with this configuration, the steps can be simplified because the first bank and second bank are formed in a single bank formation step. Also, since the coloring elements are formed by droplet discharge and the reflective film and resin layer are also both formed by droplet discharge, the steps can be even more simplified than when they are formed by photolithography.

Alternatively, the method of manufacturing a color filter substrate in accordance with the present invention preferably includes forming a resin layer on the substrate such that the resin layer has an irregular portion on its surface. The reflective film is formed after the forming of the resin layer. In the forming of the first and second banks, the first and second banks are formed simultaneously after the forming of the reflective film. The coloring elements are formed after the forming of the first and second banks.

Preferably, in the method for manufacturing a color filter substrate in accordance with the present invention, the forming of the first and second banks includes forming a thermosetting light-blocking film layer with a uniform thickness; forming a photosensitive ink repellent layer on the light-blocking film layer with a uniform thickness; and exposing and developing the light-blocking film layer. According to this configuration, an ink repellent bank can be formed in a short amount of time at low cost with simple steps.

The present invention can be embodied as an electro-optical device having a color filter substrate in accordance with the present invention, and a layer of electro-optical material provided on the color filter substrate. Examples of such an electro-optical device include liquid crystal devices, organic EL devices, plasma display devices, and other various devices.

The present invention can be embodied as an electronic device having in the above-described electro-optical device in accordance with the present invention, and a control device for controlling the operation of the electro-optical device. Examples of such an electronic device include portable phones, portable information terminals, PDAs (Personal Digital Assistants), and other various devices.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

### FIRST EMBODIMENT

### COLOR FILTER SUBSTRATE AND ELECTRO-OPTICAL DEVICE

An example of the color filter substrate in accordance with the present invention and an electro-optical device in which the color filter substrate is used will now be described. In the following description, a semi-transmissive/reflective liquid crystal device, which is an active-matrix liquid crystal device that uses a TFD (thin film diode) as a two-terminal switching component, is given as an example. The present invention is of course not limited to this embodiment.

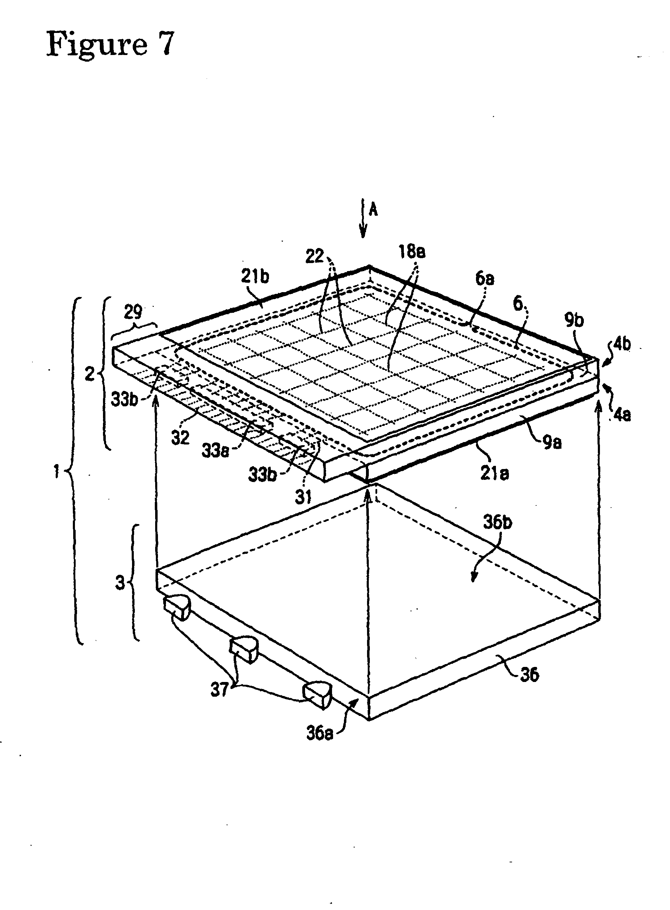

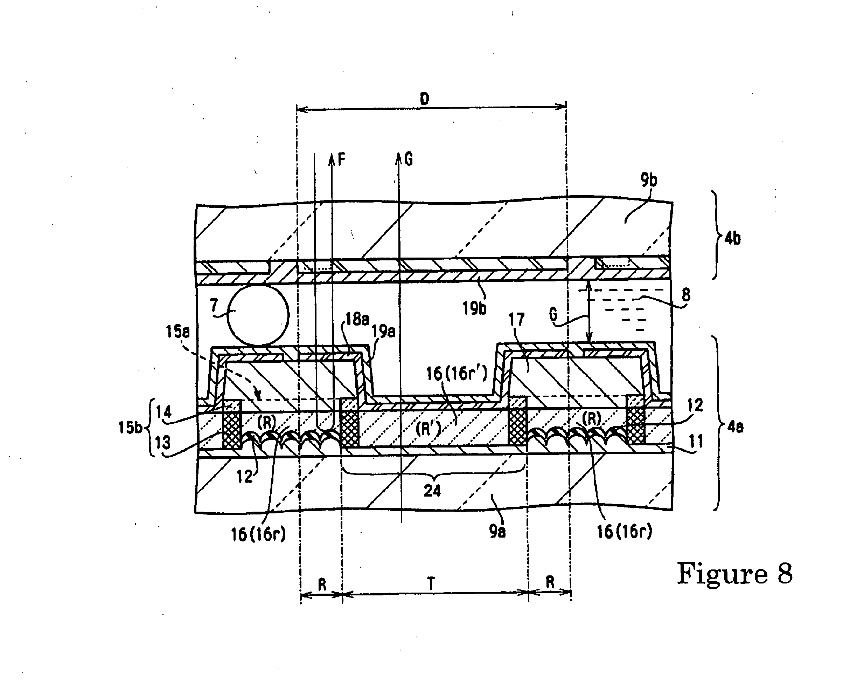

Referring to Figure 7, a liquid crystal device 1, which is an example of an electro-optical device, includes a liquid crystal panel 2 and an illuminating device 3. The liquid crystal panel 2 is formed by bonding a first substrate 4a and a second substrate 4b together with an annular sealing member 6. The first substrate 4a is a color filter substrate whereon a color filter is to be formed. The second substrate 4b is an element substrate whereon a TFD (Thin Film Detector) element is to be formed. Figure 8 shows a magnified view of one of the display dot sections D in the liquid crystal panel 2 of Figure 7. As shown in Figure 8, a gap, a so-called cell gap G, is formed between the first substrate 4a and the second substrate 4b and maintained by a spacer 7. The liquid crystal fills the cell gap G to form a liquid crystal layer 8.

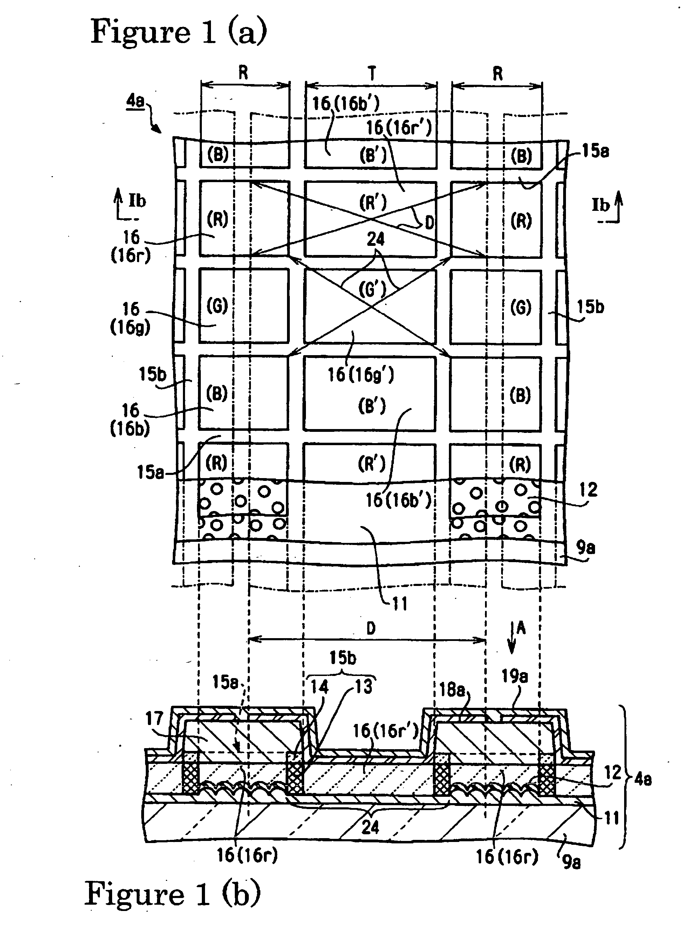

Figure 1(a) shows a two-dimensional constitution of one pixel area of the first substrate 4a, as viewed from the direction of the arrow A in Figure 7. This viewing direction is the same as the direction in which the viewer views the display. Figure 1(b) is a cross sectional view of the first substrate 4a viewed along the line Ib-Ib shown in Figure 1(a). In Figure 1(a) and Figure 1(b), the first substrate 4a includes a first substrate member (rear substrate) 9a which is made of light transmissive glass, light transmissive plastic or any other light transmissive material. A resin layer 11 is formed on the liquid crystal side of the first substrate member 9a, over which is formed a reflective film 12. The resin layer 11 may be formed by photolithography, for example. The reflective film 12 may also be formed by an ink jet or droplet discharge technology, for example.

Also, in Figure 1(a), a plurality of strip-shaped first banks 15a extending horizontally in the diagram is provided on the resin layer 11. Also, a plurality of strip-shaped second banks 15b extending vertically in the diagram is provided orthogonally to the first banks 15a. Grid-shaped banks are thereby formed by the first banks 15a and the second banks 15b, and a plurality of square areas enclosed by these banks is formed into a dot matrix configuration on the base 9a. As viewed in Figure 1(b), the second bank 15b includes a light-blocking member 13 and an ink repellent layer 14 stacked on the light-blocking member 13. The first banks 15a similarly have a two-layer structure of a light-blocking member 13 and an ink repellent layer 14. The light-blocking member 13 may be formed from a black thermosetting resin, for example. Also, the ink repellent layer 14 is formed from a photosensitive resin that has the quality of removing the material of coloring elements. Such coloring elements are discharged by an inkjet technology, as will be described hereinafter.

In Figure 1(a), coloring elements 16 are formed in the square areas enclosed by the first banks 15a and the second banks 15b. The coloring elements 16 have three colors R, G, and B, one each of which is formed in a single area enclosed by the banks 15. An R coloring element is referred to as 16r or 16r', a G coloring element is referred to as 16g or 16g', and a B coloring element is referred to as 16b or 16b', as shown in Figure 1(a).

In Figure 1(b), an overcoat layer 17 is formed on the banks 15a and 15b and the coloring elements 16, strip-shaped transparent electrodes 18a are formed on the overcoat layer 17, and an orientation film 19a is formed further on the electrodes 18a. The orientation film 19a is subjected to orientation treatment such as rubbing treatment, whereby the orientation of the liquid crystal molecules near the orientation film 19a is set. Also, a polarizing plate 21 a is mounted on the outside surface of the first base 9a by bonding or the like, as shown in Figure 7. A single strip-shaped transparent electrode 18a extends perpendicular to the paper plane of Figure 1(b), and appropriate intervals are provided between adjacent electrodes 18a. The plurality of electrodes 18a is thereby formed in a stripe configuration as seen from the direction of arrow A.

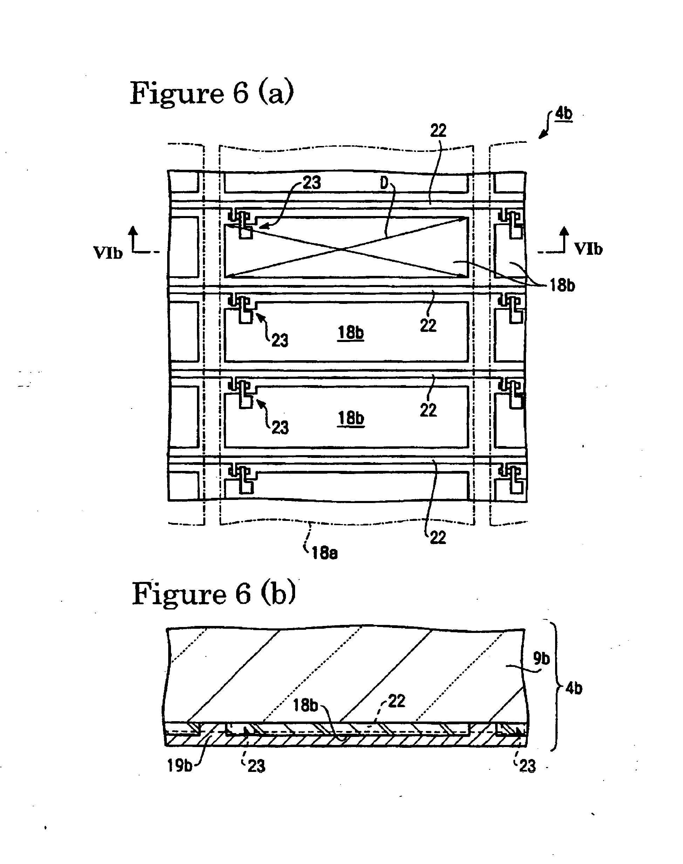

In Figure 8, the first substrate 4a and the second substrate 4b face each other across the liquid crystal layer 8. Figure 6(b) shows the cross sectional view of the second substrate 4b along line VIb-VIb shown in Figure 6 (a). In Figure 6 (b), the second substrate 4b includes a second substrate member (front substrate) 9b made of a light transmissive glass, plastic or another material. A line wiring 22 which has a linear form, TFD elements 23 which are active elements, and dot electrodes (pixel electrodes) 18b which are transparent, and orientation film 19b are all formed on a liquid crystal side surface of the second substrate 4. The orientation film 19b is given an orientation-rendering treatment such as rubbing, for orienting the liquid crystal molecules near the orientation film 19b. The rubbing direction of the surface of the orientation film 19a that faces the first substrate 4a in Figure 8 and that of the surface of the orientation film 19b that faces the second substrate 4b cross each other at an appropriate angle depending on the crystalline characteristics. In Figure 7, the polarizing plate 21b is glued or otherwise attached to the outside surface of the second substrate member 9b.

In Figure 6(a), the dot electrode 18b is formed as a substantially square or rectangular shaped dot, and is connected to the line wiring 22 through the TFD element 23. The transparent electrode 18a, formed in a strip-like shape and disposed on the first substrate 4a side, is shown in Figure 6(a) in broken lines for reference. The area where the dot electrode 18b and the transparent electrode 18a appear to overlap each other in a plan view constitutes one display dot region D. One display dot region D corresponds to one of the three colors, R, G and B. In the present embodiment of color display, three display dot regions D, which correspond to the three colors, R, G and B, constitute one pixel.

In Figure 8, the reflective film 12 has openings 24 formed thereon for each display dot region D to let the light pass through. These openings 24 are formed so as to allow the reflective film 12 to let the light pass through. As an alternative to providing the openings 24, the reflective film 12 may be reduced in thickness to give the reflective film 12 both light reflective and light transmissive functions. The area to which the reflective film 12 is provided is a reflective portion R. The area corresponding to the openings 24 is a transmissive portion T.

In Figure 1(a), the first banks 15a partition off the display dots D in the vertical direction of the diagram. The second banks 15b partition off the reflective portion R and the transmissive portion T horizontally in the diagram.

In Figure 1(b), an irregular pattern is formed on the surface of the resin layer 11 in the reflective portion R partitioned off by the second banks 15b, and another irregular pattern corresponding to the first irregular pattern is formed in the surface of the reflective film 12 layered on the resin layer 11. These irregular patterns are formed so as to be random in a plane as seen from the direction of arrow A. The light irradiated onto the reflective film 12 is scattered and reflected due to these irregular surfaces.

In Figure 1(a), a single display dot D has a transmissive portion T in the middle and reflective portions R on both sides. Coloring elements 16r', 16g', and 16b' are formed in the transmissive portion T, and coloring elements 16r, 16g, and 16b are formed in the reflective portion R. The coloring element 16r and the coloring element 16r' are made of the same color material, but the film thicknesses have the relationship of 16r < 16r' as shown in Figure 1(b). In other words, the thickness of the coloring element 16r' in the transmissive portion T is greater than the thickness of the coloring element 16 in the reflective portion R. In the same manner, the coloring element 16g and the coloring element 16g' are made of the same color material, but the film thicknesses have the relationship of 16g < 16g'. Furthermore, the coloring element 16b and the coloring element 16b' are also made of the same color material, but the film thicknesses have the relationship of 16b < 16b'.

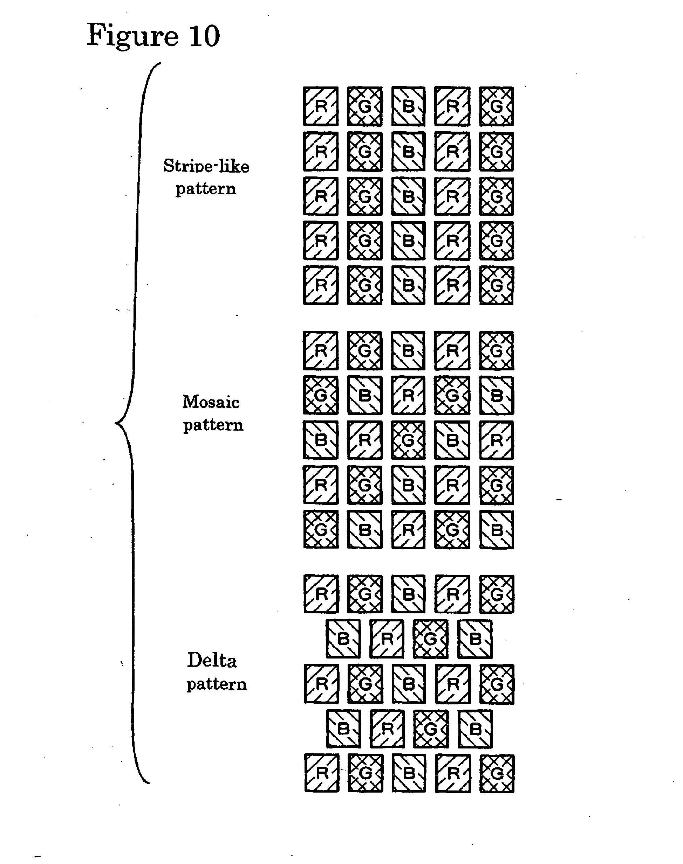

In the present embodiment, the quality of the coloring elements 16 varies between the reflective portion R and the transmissive portion T within one display dot D, but the color hue itself is the same in both. For example, the display dot D that corresponds to the coloring elements 16r and 16r' is R (red), the display dot D corresponds to the coloring elements 16g and 16g' is G (green), and the display dot D corresponds to the coloring elements 16b and 16b' is B (blue). In the present embodiment, the colors R, G, and B are aligned in a striped-like pattern in Figure 10(a), and the color filter is configured from these coloring elements 16. This stripe-like pattern herein refers to a pattern in which coloring elements of the same color are aligned in one line in the longitudinal directions, and lines of different colors are disposed in the latitudinal direction.

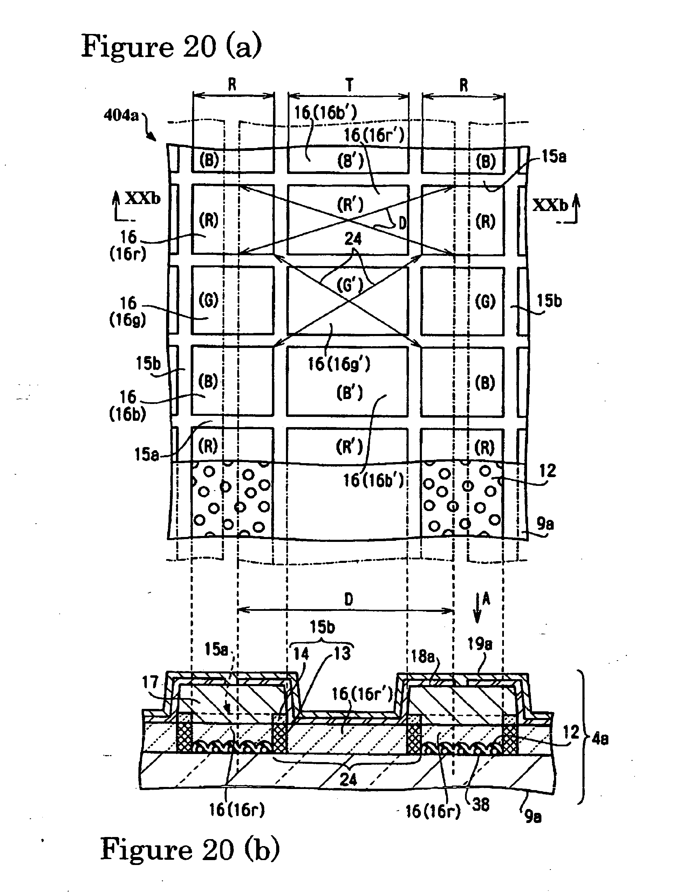

The coloring elements can alternatively be arranged in other patterns, such as a mosaic pattern shown in Figure 10(b), or a delta pattern shown in Figure 10(c). In the mosaic pattern, the three colors (R, G, and B in the example of Figure 20(b)) are repeated in the same order in both the longitudinal and latitudinal directions. In the delta pattern, each of the three colors is disposed at an end of a triangle, and also the three colors are repeated in the same order in the latitudinal direction.

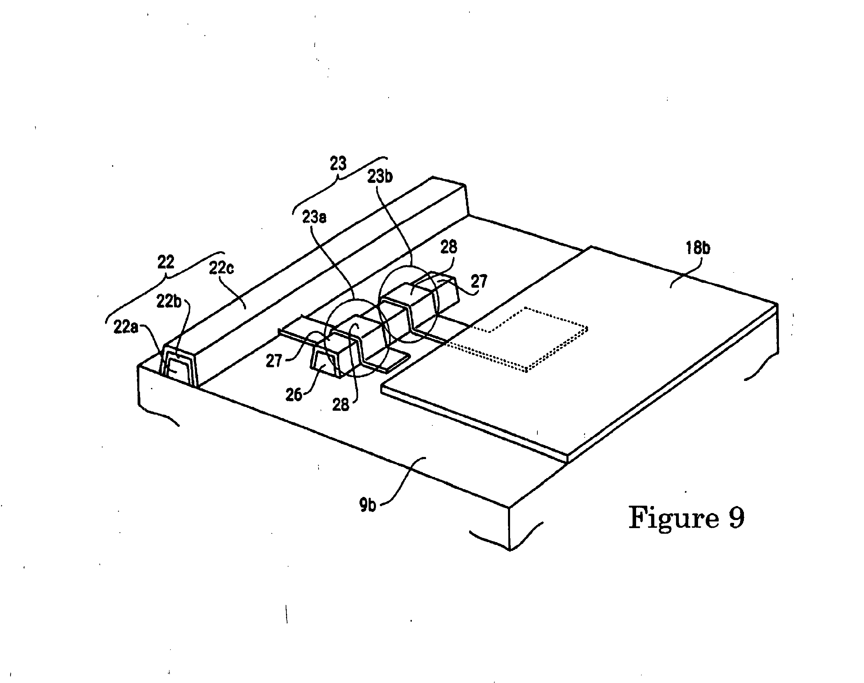

The TFD element 23 shown in Figure 6(a) is formed by connecting a first TFD element 23 and a second TFD element 23b in series, as shown in Figure 9. The TFD element 23 is formed, for instance, in the following manner. Firstly, a first layer 22a of the line wiring 22 and a first metal 26 of the TFD element 23 are formed with TaW (tantalum tungsten). Secondly, a second layer 22b of the line wiring 22 and an insulation membrane 27 of the TFD element 23 are formed by an anodizing process. Thirdly, a third layer 22c of the line wiring 22 and a second metal 28 of the TFD element 23 are formed with Cr (chrome), for example.

The second metal 28 of the first TFD member 23a extends out of the third layer 22c of the line wiring 22. The dot electrode 18b is formed so as to overlap with the tip of the second metal 28 of the second TFD member 23b. If an electric signal is to flow from the line wiring 22 in the direction toward the dot electrode 18b, the electric signal would flow through the first TFD member 23a, from the second metal 28 to the insulation film 27 and thence to the first metal 26. On the other hand, in the second TFD member 23b, the electric signal would flow from the first metal 26 to the insulation membrane 27, then to the second metal 28.

In other words, a pair of electrically opposed TFD members are connected in series between the first TFD member 23a and the second TFD member 23b. It is known that a TFD element in such a construction, commonly called a back-to-back construction, offers more stable characteristics than a TFD element constituted with only one TFD member.

In Figure 7, the second substrate 4b includes an overhang portion 29 that projects beyond the first substrate 4a. A wiring 31 and a terminal 32 are formed on a surface of the overhang portion 29 that faces the first substrate 4a. One driver IC 33a and two driver ICs 33b are installed through an ACF (anisotropic conductive film), which is not illustrated, in a region where the wiring 31 and the terminals 32 are gathered.

The wiring 31 and the terminals 32 are formed on the second substrate 4b concurrently when the line wiring 22 and the dot electrodes 18b are formed. The line wiring 22 extends onto the overhang portion 29, becomes a wiring 31 thereon, and becomes connected to the driver IC 33a. There are spherical or cylindrical conducting members (not illustrated in Figures) that are mixed into the sealing member 6, which glues the first substrate 4a and the second substrate 4b together. The transparent electrodes 18a, which are formed over the first substrate 4a, extend over the first substrate 4a up to the location of the sealing member 6, and thereupon are connected through the conductive members to the wiring 31 on the second substrate 4b. The transparent electrodes 18a, which are on the first substrate 4a, are thus connected to the driver IC 33b, which is on the second substrate 4b.

In Figure 7, an illumination device 3 is disposed facing the outside surface of the first substrate 4a, which is a component of the liquid crystal panel 2. The illumination device 3 includes a light guide 36, which is a square plate and is made of transparent plastic, for example; and LEDs 37, which are point sources of light. A light reflective sheet (not illustrated in the Figures) may be additionally installed on the surface of light guide 36, which is facing the liquid crystal panel 2. A light diffusing sheet (not illustrated in the Figures) may also be installed on the surface of light guide 36, which is facing the liquid crystal panel 2. Additionally, a prism sheet (not illustrated in the Figures) may also be installed over the light diffusing sheet. Although three LEDs 37 are used in the present embodiment, only one, two or more than three LEDs 37 may also be used. A line light source such as a cold cathode tube, or other point light sources can also be used in lieu of the LED. -

An explanation follows with regard to a liquid crystal device constituted as described in the foregoing.

If external light of sufficient brightness is available, external light such as sunlight or room light is taken inside the liquid crystal panel 2 through the second substrate 4b, as shown by an arrow F in Figure 8. This external light F, after passing through the liquid crystal layer 8, is reflected by the reflective film 12 and supplied to the liquid crystal layer 8. If, on the other hand, the external light is insufficient, the LEDs 37 of the illuminating device 3 shown in Figure 7 are lit. Here, the light from the LEDs 37, which are a point-source light, is directed inside the light guide 36 through a light entrance surface 36a of the light guide 36, and thereafter emitted as a surface light from the surface that faces the liquid crystal panel 2, which is a light emitting surface 36b. As shown by an arrow G in Figure 8, light from the entire light emitting surface 36b is supplied, now as a surface-source light as opposed to point-source light, to the liquid crystal layer 8, through the openings 24, which are formed in the light reflective film 12.

While light is being supplied to the liquid crystal 8 in the foregoing manner, the driver ICs 33a and 33b in Figure 7 control the liquid crystal panel 2. A scanning signal, for instance, is supplied to the line wiring 22 while a data signal, for instance, is supplied to the transparent electrode 18a concurrently. Here, if the TFD element 23 (see Figure 6 (a)) associated with a particular display dot assumes the selected status (that is, the "on" state) in response to a voltage differential between the scanning signal and the data signal, an image signal is written to the liquid crystal capacitance within that display dot. Thereafter, if the particular TFD element 23 assumes the unselected status (that is, the "off' state), that image signal is stored in the display dot and drives the liquid crystal 308 within the display dot.

As seen, the liquid crystal molecules of the liquid crystal layer 8 are controlled for each display dot. That is, light passing through liquid crystal layer 8 of each display dot D is modulated. As the light so modulated passes through polarizing plate 21b which is located on the second substrate 4 side in Figure 7, characters, numbers, patterns and other images are displayed in the effective display region of the liquid crystal panel 2. A display that uses the external light reflected off the reflective film 12 shown in Figure 8 is the display in the reflective display mode. A display that uses the light from the illuminating device 3 is the display in the transmissive display mode. In the present embodiment, the reflective display mode and the transmissive display mode may be used as desired by the user or as automatically selected to suit the ambient environment.

In the present embodiment, the second bank 15b is provided between the reflective portion R and the transmissive portion T in one display dot D as shown in Figure 1(a). The coloring elements 16r, 16g, and 16b and the coloring elements 16r', 16g', and 16b' on either side of the second bank 15b differ in a number of properties. Specifically, in the present embodiment, the coloring elements 16 and 16' are made of the same color material but are set so that the film thicknesses have the relationship of 16r < 16r', 16g < 16g', and 16b < 16b', as shown in Figure 1(b). In other words, the films of the coloring elements 16 are thick in the transmissive portion T and thin in the reflective portion R.

Thus, a bright display is possible during the reflective display mode that uses the reflective film 12, and a display rich in color is possible during the transmissive display mode that uses the openings 24 of the reflective film 12. Furthermore, a uniform display can therefore be maintained when the reflective display mode is used as well as when the transmissive display is used.

Also, since the coloring film thicknesses are set to satisfy the relationship 16r < 16r', 16g < 16g', and 16b < 16b' it is possible to ensure that the reflected light is bright and the color of the transmitted light is strong. In this case, the brightness of the reflected light and the color saturation of the transmitted light are determined by the difference in film thickness, for example (16r' - 16r). This difference is preferably set to a suitable value for each color R, G, and B. The color balance of the color display can thereby be set at a desired balance.

In the present embodiment, the coloring elements 16 of Figure 1 can be formed by photolithography or ink jetting. However, in the present embodiment, in which the reflective portion R and the transmissive portion T are partitioned off by the second banks 15b, it is particularly convenient to use ink jetting. This is because the optical conditions of the coloring elements 16 can be changed between the reflective portion R and the transmissive portion T by appropriately varying the droplet discharge conditions of ink jetting between the reflective portion R and the transmissive portion T.

Furthermore, the coloring elements 16 with different optical conditions no longer affect each other because the second bank acts as a barrier wall, and therefore no problems such as the optical conditions of the coloring elements being altered by other coloring elements will occur.

### MODIFICATION OF FIRST EMBODIMENT

In the embodiment described above with reference to Figure 1 (b), the coloring elements 16r, 16g, and 16b in the reflective portion R and the coloring elements 16r', 16g', and 16b' in the transmissive portion T had the same color material but different film thicknesses. Alternatively, it is also possible to use color materials with the same hue but different light transmittance rates for the coloring elements 16r, 16g, and 16b in the reflective portion R and the coloring elements 16r', 16g', and 16b' in the transmissive portion T. For example, it is possible to use color materials that have the same "red" hue but have different light transmittance rates, with the color material having a higher light transmittance rate for the coloring element 16r in the reflective portion R and the color material having a lower light transmittance rate for the coloring element 16r' in the transmissive portion T.

It is also possible to use coloring elements with different color materials and different film thicknesses for the coloring elements 16r, 16g, and 16b in the reflective portion R and the coloring elements 16r', 16g', and 16b' in the transmissive portion T. For example, the arrangement of the coloring elements 16 may be in mosaic pattern shown in Figure 10(b), with adjacent coloring elements having different thicknesses.

In the foregoing embodiment, the present invention was applied to semi-transmissive-reflective liquid crystal displaying devices of active matrix type using TFD elements, which are 2-terminal type switching elements. The present invention is, however, also applicable to liquid crystal displaying devices of active matrix type using TFT (thin film transistor), which are 3-terminal type switching elements. The present invention is likewise applicable to simple matrix type liquid crystal devices that use no switching elements. The present invention is further applicable to reflective type liquid crystal devices. The present invention is still further applicable to non-liquid crystal type electro-optical devices such as organic EL devices, plasma display devices, electron emission components (field emission display and surface-conduction electron-emitter display), and many others.

### METHOD OF MANUFACTURING COLOR FILTER SUBSTRATE 4A

The method for manufacturing a color filter substrate in accordance with the present invention will now be described using a case of manufacturing the color filter substrate 4a shown in Figure 1 as an example.

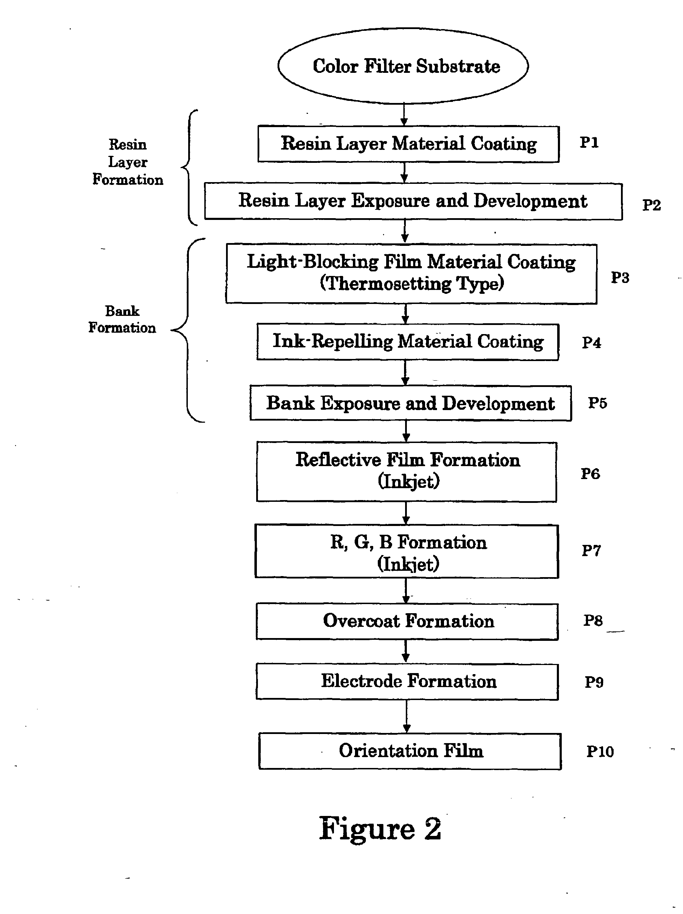

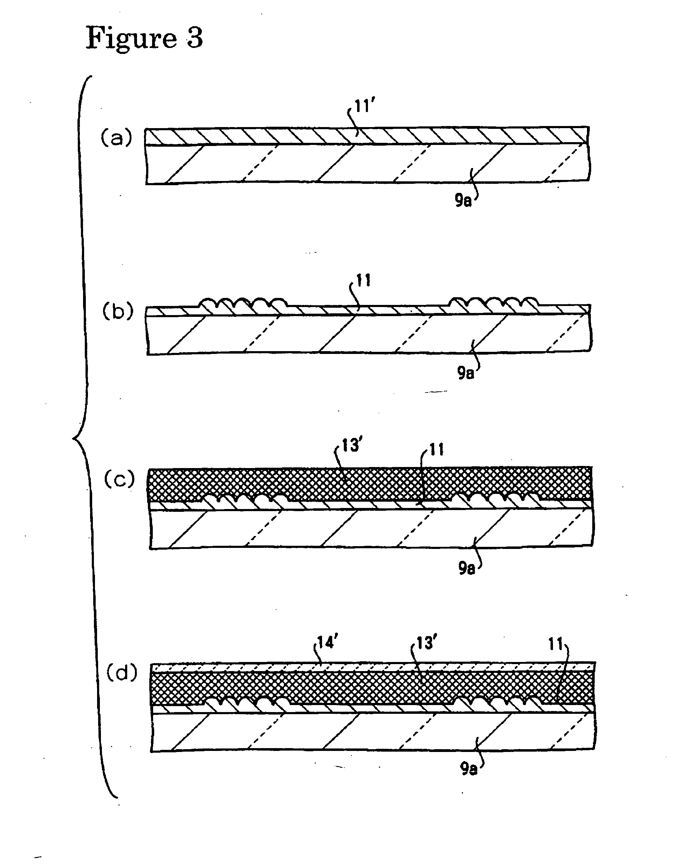

Figure 2 shows a method of manufacturing a color filter substrate according to one embodiment of the present invention. In process P1, the material 11' for the resin layer 11 which is a photosensitive resin in the present embodiment, is evenly applied over the substrate 9a shown in Figure 3(a). Next, in process P2, the layer of the resin layer material 11' is exposed and developed to form the resin layer 11 as shown in Figure 3(b). Concurrently, a randomly rugged pattern is formed over the surface of resin layer 11. In this manner, a resin layer 11 with random surface irregularities is formed on the base 9a.

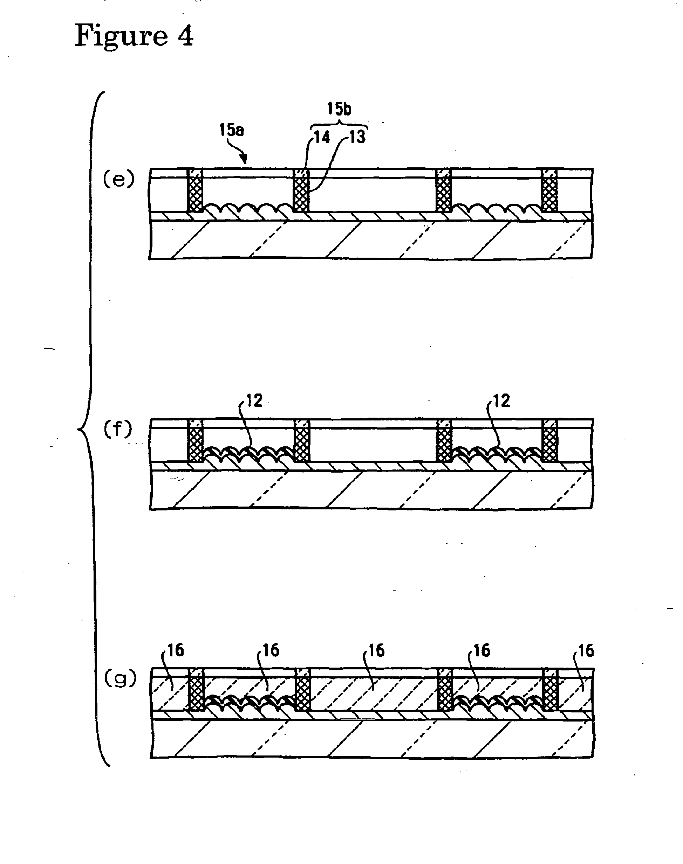

Next, in the subsequent step P3, thermosetting light-blocking material 13' is applied in a uniform thickness as shown in Figure 3(c). In step P4, ink repellent material 14' is applied to the layer of the light-blocking material 13' in a uniform thickness, as shown in Figure 3(d). The resin laminate in Figure 3(d) is exposed to light and developed in the subsequent step P5, and the second banks 15b with a layered structure having the light-blocking member 13 and ink repellent layer 14, as well as the first banks 15a with the same two-layered structure, are formed as shown in Figure 4(e).

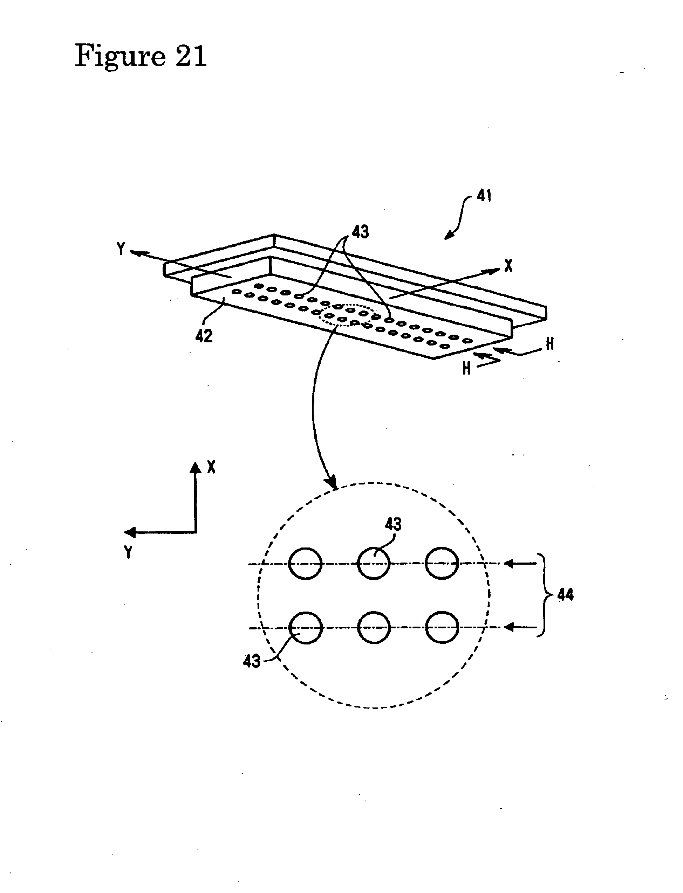

Then the reflective film 12 is formed by ink jetting in the subsequent step P6, as shown in Figure 4(f). The reflective film 12 is formed in accordance with an inkjet technology by scanning/moving the inkjet head 41 shown in Figure 21 in a planar fashion as shown by arrows X and Y, for example. The inkjet head 41 has a substantially rectangular casing 42, and a plurality of nozzles 43 is provided to the bottom of the casing 42. The nozzles 43 have a small opening with a diameter of about 0.02 to 0.1 mm.

In the present embodiment, the plurality of nozzles 43 is provided in two rows, and two nozzle rows 44, 44 are formed in the head 41. In each nozzle row 44, the nozzles 43 are provided in a straight line at predetermined intervals. Liquid material is supplied to these nozzle rows 44 from directions shown by arrows H. The liquid material thus supplied is discharged as tiny droplets from the nozzles 43 in accordance with the vibration of the piezoelectric element 58. Although there are two nozzle rows 44 in this embodiment, the number of nozzle rows 44 may also be one or three or more.

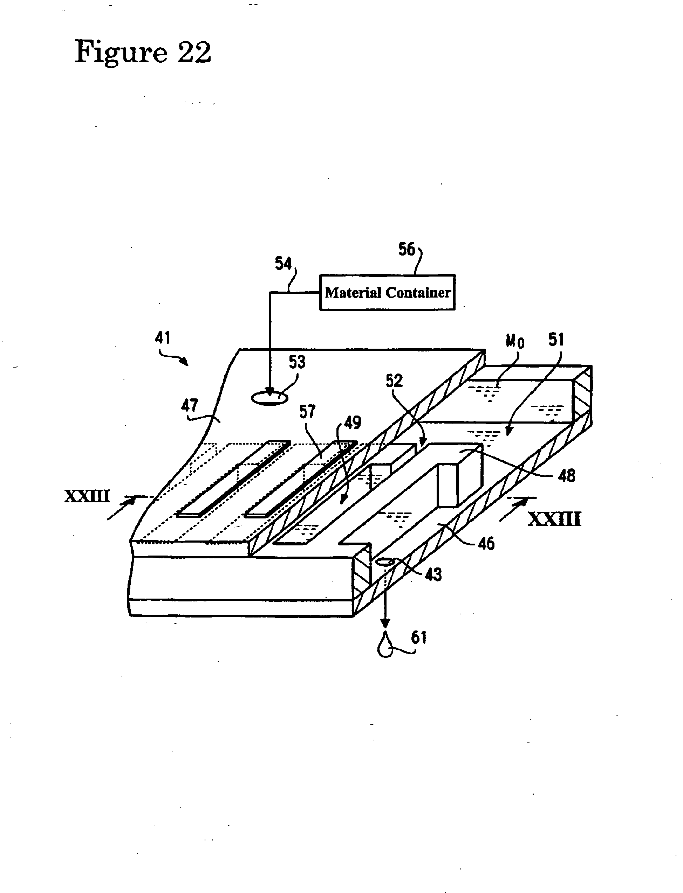

The inkjet head 41 has, for example, a stainless nozzle plate 46, a vibrating plate 47 disposed facing the nozzle plate, and a plurality of partitioning members 48 for bonding together the nozzle plate 46 and the vibrating plate 47, as shown in Figure 22. Also, a plurality of storage chambers 49 for storing the liquid material, and a liquid collector 51 disposed at a location in which the liquid material temporarily collects, are defined by the partitioning members 48 between the nozzle plate 46 and the vibrating plate 47. Furthermore, each of the plurality of storage chambers 49 and the liquid collector 51 are communicated via a channel 52. Also, a feed port 53 for the liquid material is formed at an appropriate location in the vibrating plate 47, and a material container 56 is connected to the feed port 53 via a tube 54. Material for a reflective film is stored in the container 56, and liquid material M0 supplied from the container 56 is filled into the liquid collector 51 and then filled into the storage chambers 49 via the channel 52.

The nozzle plate 46, which is a part of the inkjet head 41, is provided with nozzles 43 for spraying liquid material in jet style from the storage chambers 49. A plurality of these nozzles 43 is aligned to constitute nozzle rows 44 as previously described with respect to Figure 21.

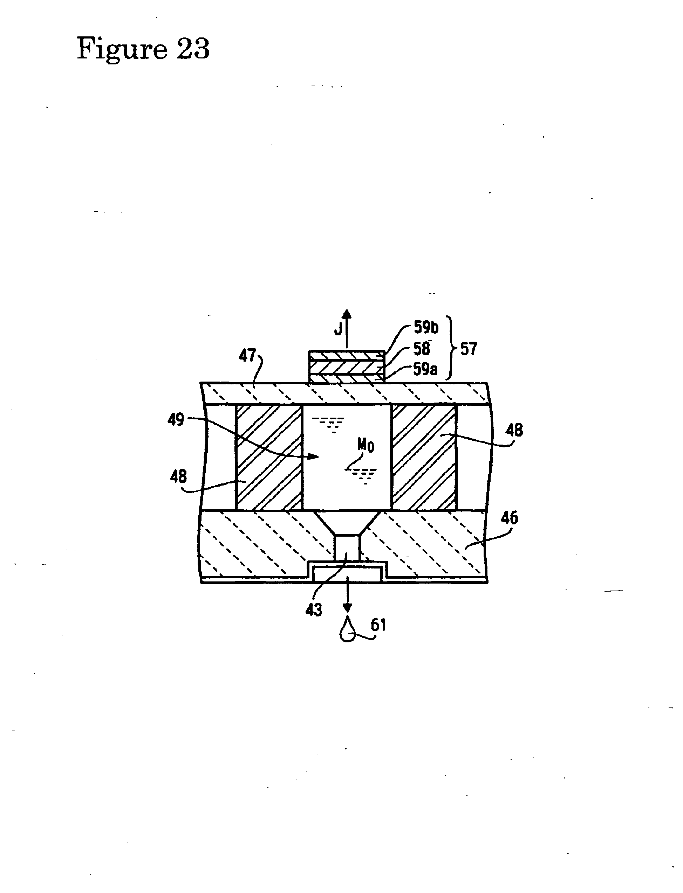

Also, the vibrating plate 47 is provided with a pressure element 57 so as to correspond to the storage chambers 49 for applying pressure to the liquid material. This pressure element 57 has a piezoelectric element 58 and a pair of electrodes 59a and 59b on both sides of the piezoelectric element 58, as shown in Figure 23.

Upon passing the electricity between the electrodes 59a and 59b, the piezoelement 58 distortedly deforms to project outward in the direction of arrow J, thereby increasing the volume of the storage chamber 49. Accordingly, the liquid material M0 flows from the liquid reservoir 51 to the storage chamber 49 via the passage 52 by a volume equivalent to the increase in the volume of the storage chamber 49.

When the passing of the electricity to the piezoelement 58 is stopped, the piezoelement 58 and the vibrating plate 47 return to the original state, and the volume of the storage chamber 49 also returns to the original volume. As a result, the pressure on the liquid material within the storage chamber 49 increases, jetting the liquid material out of the nozzle 43 as droplets 61. The droplets 61 are jetted out stably as minute droplets regardless of the kind of solvent or other ingredients that might be included in the liquid material.

By forming the reflective film 12 with the ink jetting technology that uses the aforementioned inkjet head system, it is possible to reduce the consumption of reflective film material greatly, as compared to a case where the reflective film is formed with a conventional patterning technology that uses photolithography. The production process is also significantly simplified. Also, since the banks 15a and 15b contain an ink repellent layer 14, the material of the reflective film 12 can be prevented from adhering to the banks 15a and 15b.

When the reflective film 12 is formed as shown in Figure 4(f) by ink jetting, the coloring elements 16 are formed as shown in Figure 4(g), by ink jetting in the subsequent step P7 shown in Figure 2. The inkjet technique used herein can be performed using the inkjet head 41 shown in Figures 10 through 12, which is used to form the reflective film 12 described above.

In this case, the coloring element material of the colors R, G, and B is stored in the material container 56 in Figure 22. Also, dedicated inkjet heads 41 are provided for each of the coloring elements 16 of the three colors R, G, and B; and the heads 41 are installed in different stages in the production line. Coloring elements 16 of each color are then separately formed with the inkjet heads 41 for each color. Depending on the situation, it is also possible to incorporate a supply system for coloring element material of all three colors into one inkjet head 41, and to discharge the coloring elements 16 of the three colors solely with the single inkjet head 41.

Thus, if the coloring elements 16 are formed using ink-jetting ink discharge techniques, consumption of the coloring film material is markedly reduced in comparison with the case where the coloring elements 16 are formed by patterning methods of conventional photolithography. The steps of manufacturing the coloring elements 16 are also much simpler than with photolithography. Since the banks 15a and 15b contain an ink repellent layer 14, the material of the coloring elements 16 can be prevented from adhering to the banks 15a and 15b. Therefore, the occurrence of colors becoming mixed between the coloring elements 16r, 16g, and 16b can be prevented.

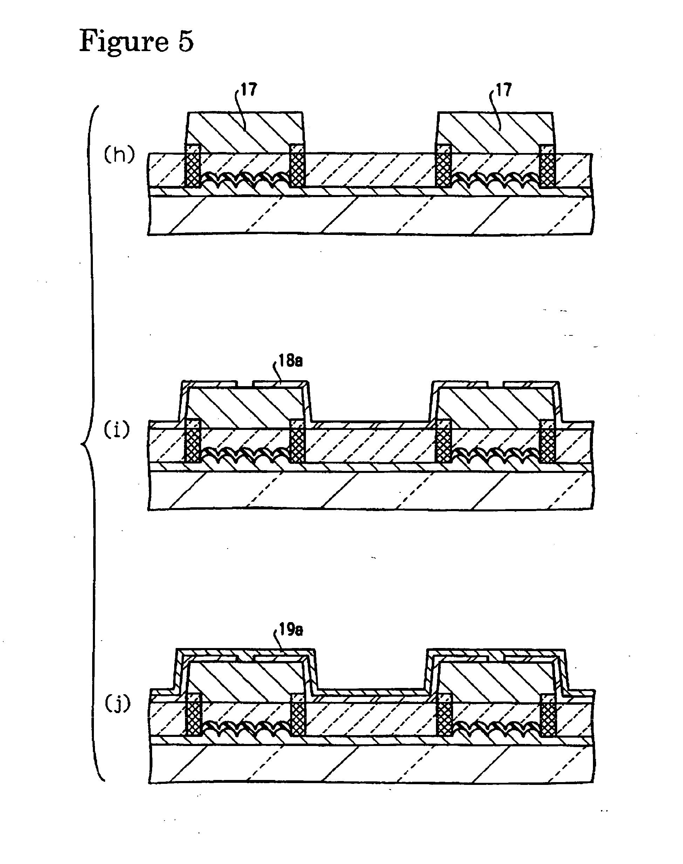

After the coloring elements 16 are formed by ink jetting as shown in Figure 4(g), an overcoat layer 17 as shown in Figure 5(h) is formed in the subsequent step P8 shown in Figure 2. Furthermore, strip-shaped electrodes 18a are formed in step P9 as shown in Figure 5(i) by photolithography and etching, from ITO (indium tin oxide) or another such transparent conductive material. Furthermore, an orientation film 19a is formed in step P10 from polyimide or the like as shown in Figure 5(j). A color filter substrate 4a is thereby manufactured as described above.

### MODIFICATION OF METHOD OF MANUFACTURING COLOR FILTER SUBSTRATE 4A

In the present embodiment, the invention was applied to manufacturing methods of a semi-transmissive-reflective liquid crystal displaying device of active matrix type that uses TFD elements, which are 2-terminal type switching elements. The invention, however, is also applicable to manufacturing methods of a liquid crystal displaying device of active matrix type that uses TFT elements (thin film transistor), which are 3-terminal type switching elements. The invention is likewise applicable to manufacturing methods of a simple matrix type liquid crystal device that uses no switching elements. The invention is also applicable to manufacturing methods of a reflective type liquid crystal device. The invention is further applicable to manufacturing methods of a non-liquid crystal type electro-optical device such as organic EL device, plasma display device and many others.

### SECOND EMBODIMENT

### COLOR FILTER SUBSTRATE 4A"

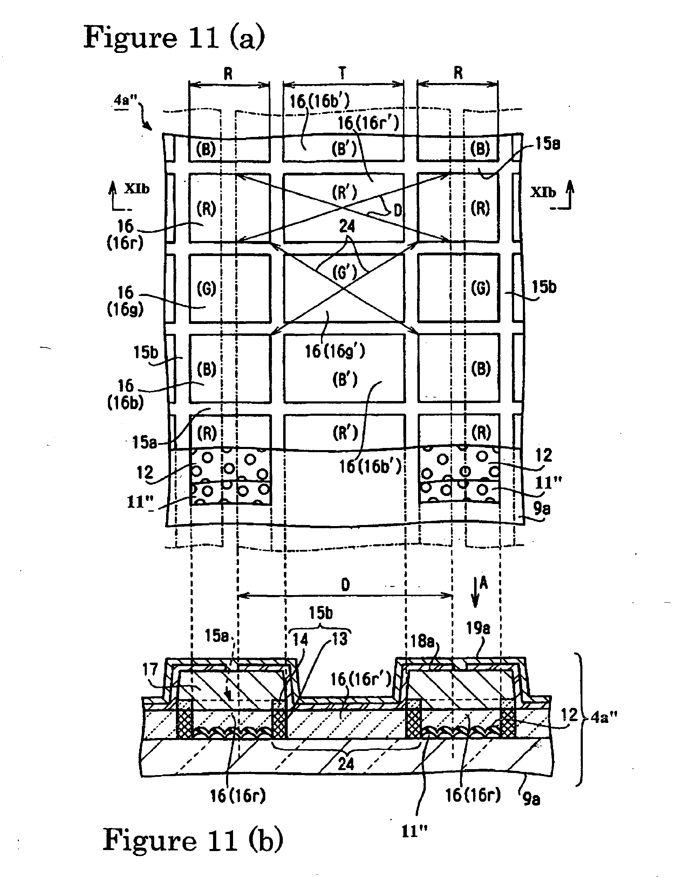

Figure 11 shows a color filter substrate in accordance with another embodiment of the present invention. This embodiment differs from the previous embodiment shown in Figure 1 in the configuration of the resin layer 11". But otherwise the configuration is the same as color filter substrate 4a of the embodiment in Figure 1. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. The parts of the second embodiment that differ from the parts of the first embodiment will be indicated with a double prime (").

In the color filter substrate 4a of the embodiment in Figure 1, the resin layer 11 is provided over the entire surface of the base 9a, and an irregular pattern is formed on portions of the surface of the resin layer 11 that correspond to the reflective portion R. In the color filter substrate 4a" of the embodiment shown in Figure 11, the resin layer 11" is not provided over the entire base 9a, but the resin layer 11" is provided only to the area that corresponds to the reflective portion R. This configuration is preferred when the resin layer 11" is formed between the second banks 15b by ink jetting.

### METHOD OF MANUFACTURING COLOR FILTER SUBSTRATE 4A"

A method of manufacturing a color filter substrate 4a" in accordance with another embodiment of the present invention will now be described using the manufacture of the color filter substrate 4a" shown in Figure 11 as an example.

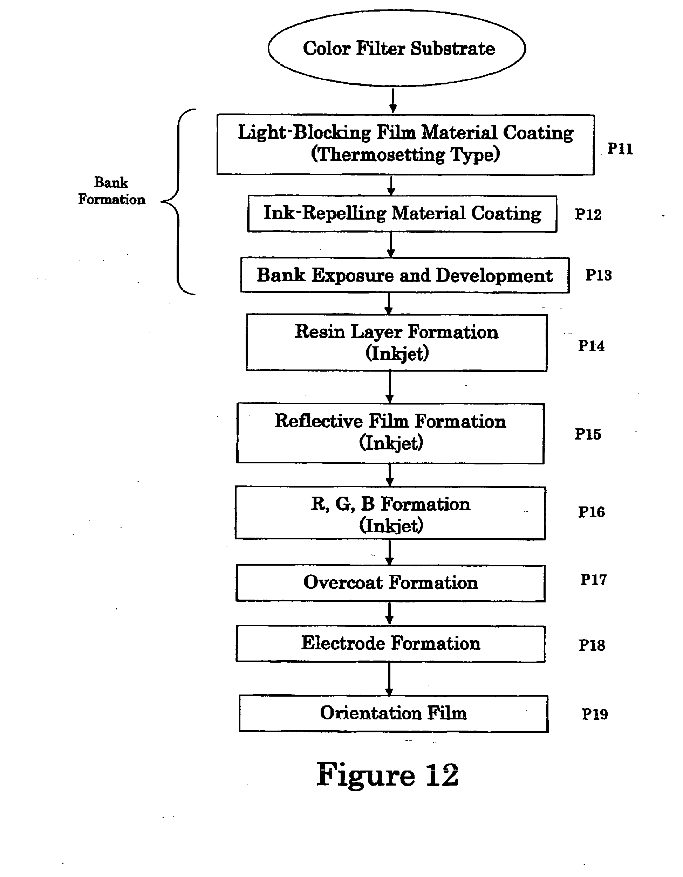

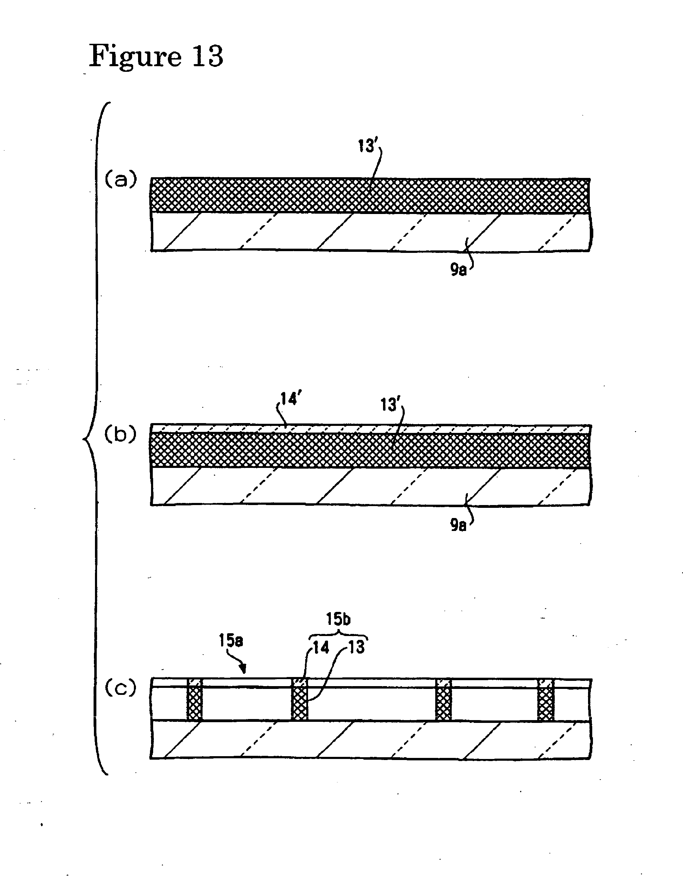

Figure 12 shows a method of manufacturing a color filter substrate according to another embodiment of the present invention. First, a thermosetting light-blocking member 13' is applied in a uniform thickness over the base 9a in step P11, as shown in Figure 13(a). In step P12, ink repellent material 14' is then applied thereto in a uniform thickness, as shown in Figure 13(b). The resin laminate in Figure 13(b) is exposed to light and developed in the subsequent step P13, and the second banks 15b with a layered structure having the light-blocking member 13 and ink repellent layer 14, as well as the first banks 15a having the same two-layered structure, are formed as shown in Figure 13(c).

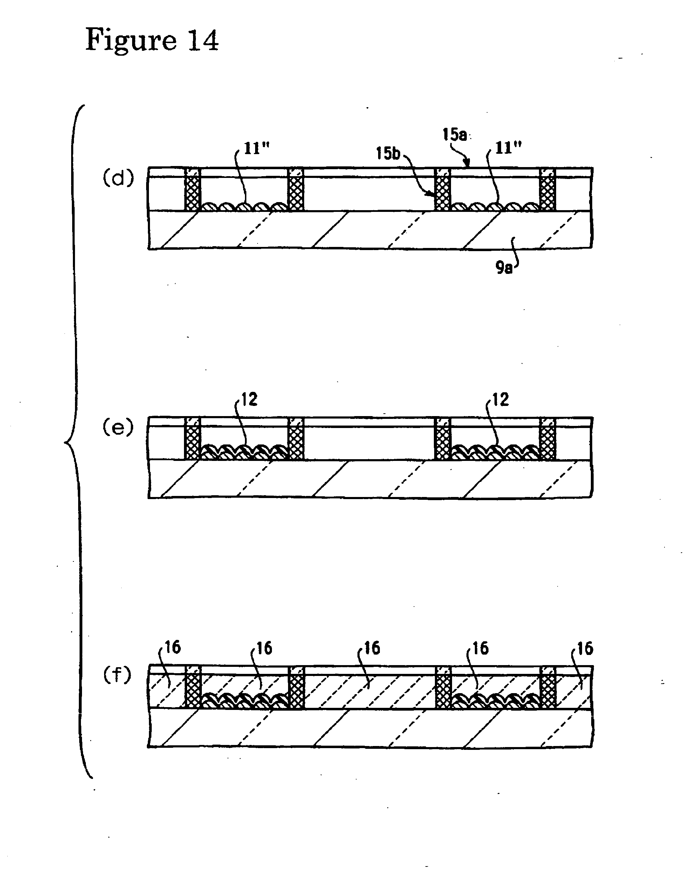

The resin layer 11" is formed by ink jetting in the areas enclosed by the first banks 15a and second banks 15b in the subsequent step P14 in Figure 12, as shown in Figure 14(d). This inkjet step is performed, for example, by discharging material for the resin layer 11 as droplets from the nozzles 43 while scanning/moving the inkjet head 41 shown in Figures 21, 22, and 23 within a plane. Since the resin layer 11" is formed only in the areas enclosed by the first banks 15a and second banks 15b, the amount of material consumed is markedly reduced.

In this case, a multiple number of beads of suitable size are included in the material for the resin layer 11", such that a random irregular pattern can be formed on the surface of the resin layer 11", which is formed on the base 9a, by discharging the bead-containing resin material from the inkjet head 41. Since a resin layer 11" having an irregular pattern on the surface can then be formed in the desired areas by a single inkjet step, the steps of manufacturing the color filter substrate 4a" are markedly shortened and consumption of the material for the resin layer 11" is greatly reduced. A suitable three-dimensional shape such as spheres, cylinders, or the like is selected as necessary for the shape of the beads.

Also, the following method can be employed instead of mixing beads into the resin material discharged by ink jetting. In other words, a resin material that does not contain a mixture of beads or the like is discharged onto the base 9a by ink jetting, then baking conditions for baking the resin material are suitably selected such that wrinkles are created on the surface of the baked resin material during the baking of the resin material and a random irregular pattern can be formed due to the seams. A resin layer 11" having an irregular pattern on the surface can be formed in desired areas in a single inkjet step with this method as well.

After a resin layer 11" having an irregular pattern is formed on the base 9a as described above, a reflective film 12 is formed as shown in Figure 14(e) by ink jetting in the subsequent step P15 shown in Figure 12,. The formation of a film with an inkjet system herein is performed, for example, by discharging the material for the reflective film 12 as droplets from the nozzles 43 while scanning/moving the inkjet head 41 shown in Figures 21, 22, and 23 within a plane. If the reflective film 12 is formed in this manner by ink jetting with the aid of the inkjet system, the amount of reflective film material consumed can be greatly reduced in comparison with thee case where the reflective film 12 is created by patterning methods such as conventional photolithography.

Also, with the ink jet technology, the steps of manufacturing the reflective film12 are much simpler than with photolithography. Furthermore, since the banks 15a and 15b contain the ink repellent layers 14, the material of the reflective film 12 can be prevented from adhering to the banks 15a and 15b.

After the reflective film 12 is formed by ink jetting as described above, the coloring elements 16 are formed by ink jetting in the subsequent step P16 in Figure 12, as shown in Figure 14(e). The inkjet technique used herein can be performed using the inkjet head 41 shown in Figures 21 through 23, which is used to form the resin layer 11 or reflective film 12 described above.

In this case, the coloring element material of the colors R, G, and B is stored in the material container 56 in Figure 22. Also, dedicated inkjet heads 41 are prepared for each of the coloring elements 16 of the three colors R, G, and B; and the heads 41 are installed in different stages in the production line. Coloring elements 16 of each color are then separately formed with the inkjet heads 41 for each color. Depending on the situation, it is also possible to incorporate a supply system for coloring element material in three colors into one inkjet head 41, and to discharge the coloring elements 16 of the three colors solely with the single inkjet head 41.

Thus, if the coloring elements 16 are formed using ink-jetting ink discharge techniques, consumption of the coloring film material is markedly reduced in comparison with the case where the coloring elements 16 are formed by patterning methods such as conventional photolithography. The steps of manufacturing the coloring elements 16 are also much simpler than with photolithography. Since the banks 15a and 15b contain an ink repellent layer 14, the material of the coloring elements 16 can be prevented from adhering to the banks 15a and 15b. Therefore, the occurrence of colors becoming mixed between the coloring elements 16r, 16g, and 16b can be prevented.

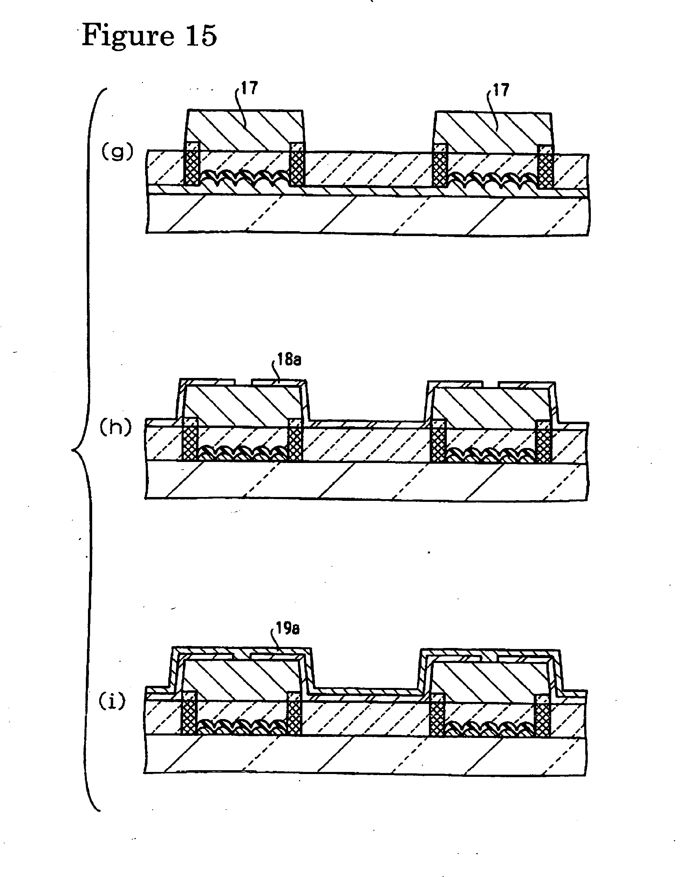

After the coloring elements 16 are formed by ink jetting as shown in Figure 14(f), an overcoat layer 17 as shown in Figure 15(g) is formed in the subsequent step P17 shown in Figure 12. Furthermore, strip-shaped electrodes 18a are formed in step P18 as shown in Figure 15(h) by photolithography and etching, from ITO (indium tin oxide) or another such transparent conductive material. Furthermore, an orientation film 19a is formed in step P19 from polyimide or the like as shown in Figure 15(i). A color filter substrate 4a" is thereby manufactured as described above.

### THIRD EMBODIMENT

### METHOD OF MANUFACTURING COLOR FILTER SUBSTRATE 4A

The method for manufacturing a color filter substrate in accordance with still another embodiment of the present invention will now be described using a case of manufacturing the color filter substrate 4a shown in Figure 1 as an example.

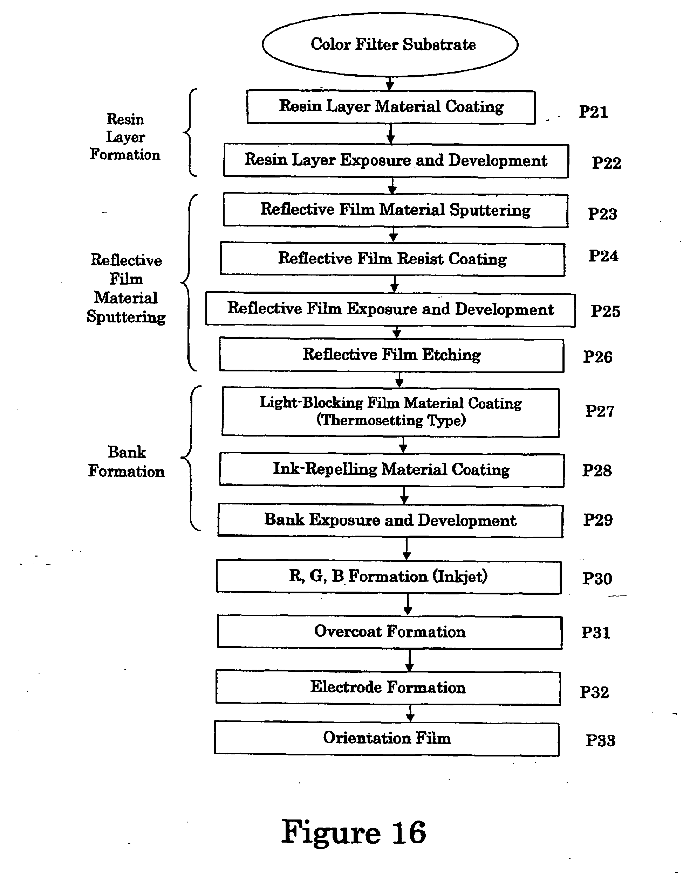

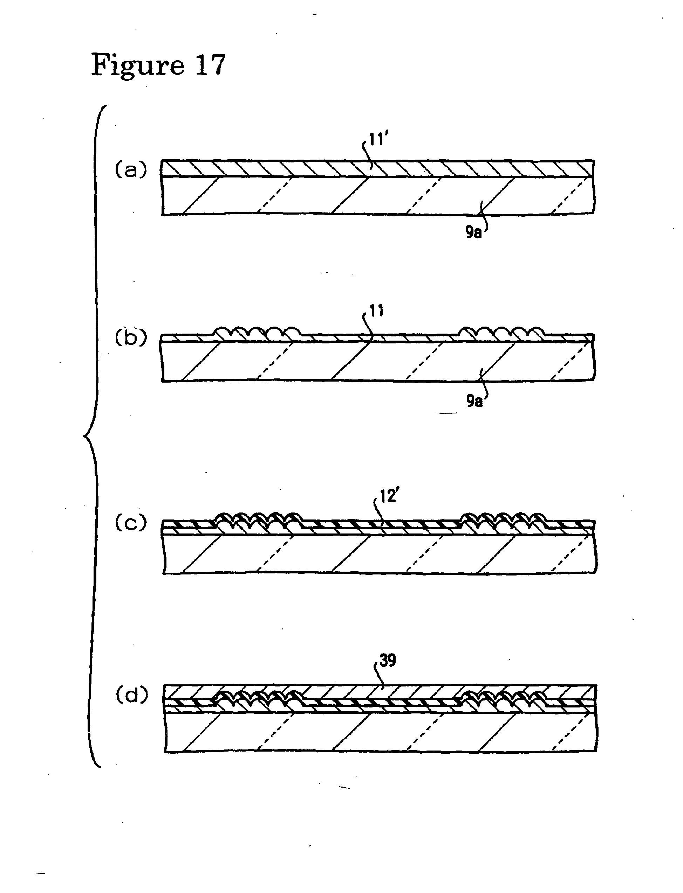

Figure 16 shows a method of manufacturing a color filter substrate according to one embodiment of the present invention. In process P21, the material 11' for the resin layer 11, which is a photosensitive resin in the present embodiment, is evenly applied over the substrate 9a shown in Figure 17(a). Next, in process P22, the layer of the resin layer material 11' is exposed and developed to form the resin layer 11 as shown in Figure 17(b). Concurrently, a randomly rugged pattern is formed over the surface of resin layer 11. In this manner, a resin layer 11 with random surface irregularities is formed on the base 9a.

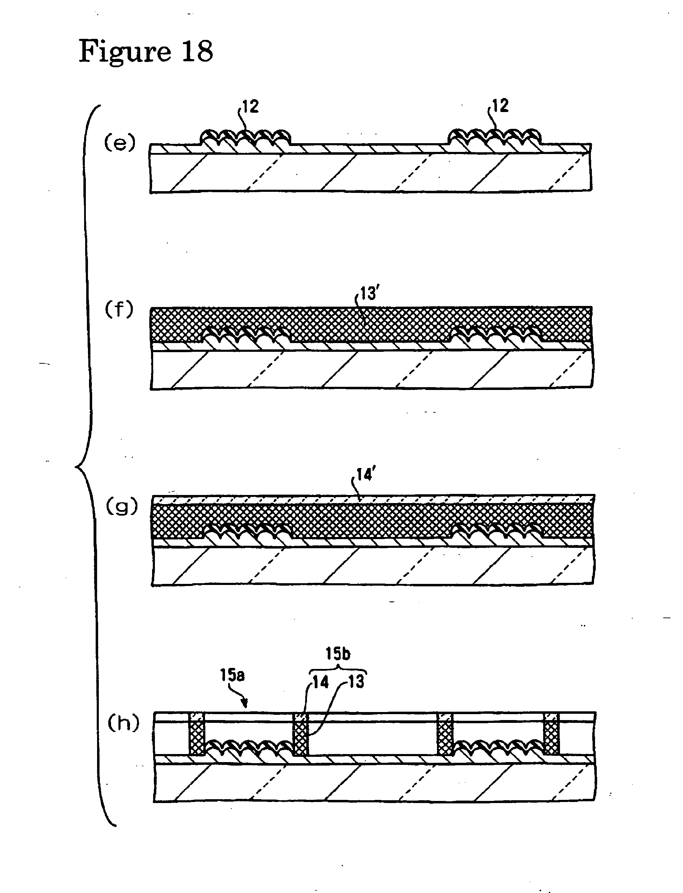

The material 12' for a reflective film 12 is formed into a film by sputtering as shown in Figure 17(c) in the subsequent step P23 in Figure 16, and a resist 39 is applied with a uniform thickness in the subsequent step P24, as shown in Figure 17(d). The resist 39 is exposed to light and developed in the subsequent step P25 to form a resist pattern, and then a reflective film 12 is formed as shown in Figure 18(e) by etching in step P26. The reflective film 12 is formed on the base 9a in this manner. At this time, an irregular pattern coinciding with the irregular pattern on the resin layer 11 is formed in the surface of the reflective film 12.

Next, in the subsequent step P27, thermosetting light-blocking material 13' is applied in a uniform thickness as shown in Figure 18(f). In step P28, ink repellent material 14' is applied to the layer of the light-blocking material 13' in a uniform thickness, as shown in Figure 18(g). The resin laminate in Figure 18(g) is exposed to light and developed in the subsequent step P29, and the second banks 15b with a layered structure having the light-blocking member 13 and ink repellent layer 14, as well as the first banks 15a with the same two-layered structure, are formed as shown in Figure 18(h).

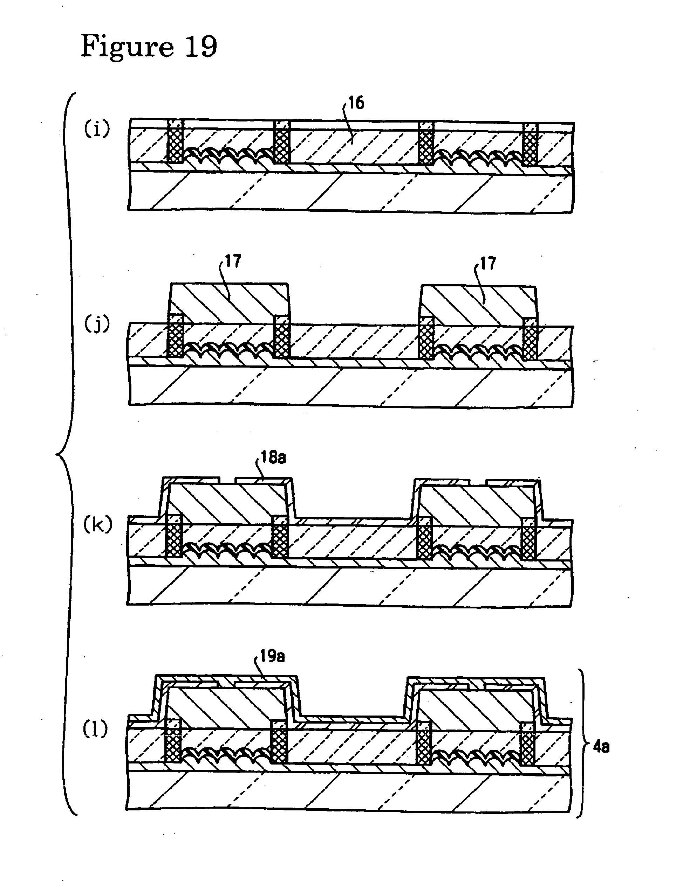

The coloring elements 16 are then formed as shown in Figure 19(i) by ink jetting in the subsequent step P30 in Figure 16. The inkjet technique used herein can be formed using the previously described inkjet head 41 shown in Figures 21 through 23.

In this case, the coloring element material of the colors R, G, and B is stored in the material container 56 in Figure 22. Also, dedicated inkjet heads 41 are prepared for each of the coloring elements 16 of the three colors R, G, and B; and the heads 41 are installed in different stages in the production line. Coloring elements 16 of each color are then separately formed with the inkjet heads 41 for each color. Depending on the situation, it is also possible to incorporate a supply system for coloring element material in three colors into one inkjet head 41, and to discharge the coloring elements 16 of the three colors solely with the single inkjet head 41.

Thus, if the coloring elements 16 are formed using ink-jetting ink discharge techniques, consumption of the coloring film material is markedly reduced in comparison with the case where the coloring elements 16 are formed by patterning methods of conventional photolithography. The steps of manufacturing the coloring elements 16 are also much simpler than with photolithography. Since the banks 15a and 15b contain an ink repellent layer 14, the material of the coloring elements 16 can be prevented from adhering to the banks 15a and 15b. Therefore, the occurrence of colors becoming mixed between the coloring elements 16r, 16g, and 16b can be prevented.

After the coloring elements 16 are formed by ink jetting as shown in Figure 19(i), an overcoat layer 17 as shown in Figure 19(j) is formed in the subsequent step P31 shown in Figure 16. Furthermore, strip-shaped electrodes 18a are formed in step P32 as shown in Figure 19(k) by photolithography and etching, from ITO (indium tin oxide) or another such transparent conductive material. Furthermore, an orientation film 19a is formed in step P33 from polyimide or the like as shown in Figure 19(1). A color filter substrate 4a is thereby manufactured as described above.

### FOURTH EMBODIMENT

### COLOR FILTER SUBSTRATE 404A

Figure 20 shows yet another embodiment of a color filter substrate in accordance with the present invention. This embodiment differs from the previous embodiment shown in Figure 1 primarily in that a resin layer 11 is not provided and the reflective film 12 is formed directly on the base 9a by ink jetting.

The configuration of the color filter substrate 404a in Figure 20 is otherwise the same as that of the color filter substrate 4a in the embodiment of Figure 1. In the present embodiment, material for the reflective film 12 has a multiple number of beads 38 mixed therein, and is discharged by ink jet or deposit discharge techniques into the reflective portion R enclosed by the first banks 15a and second banks 15b, whereby the material is baked. After baking, the reflective film 12 having an irregular surface pattern corresponding to the beads 38 is formed in the reflective portion R. According to this embodiment, there is no need for the resin layer 11 in Figure 1, so the steps are further simplified and the cost of materials is further reduced.

### FIFTH EMBODIMENT

### ELECTRONIC DEVICE

An explanation of an electronic instrument in accordance with a fifth embodiment of the present invention will follow. This embodiment shows only an example of this invention. Therefore, the scope of the present invention is not limited to this particular embodiment.

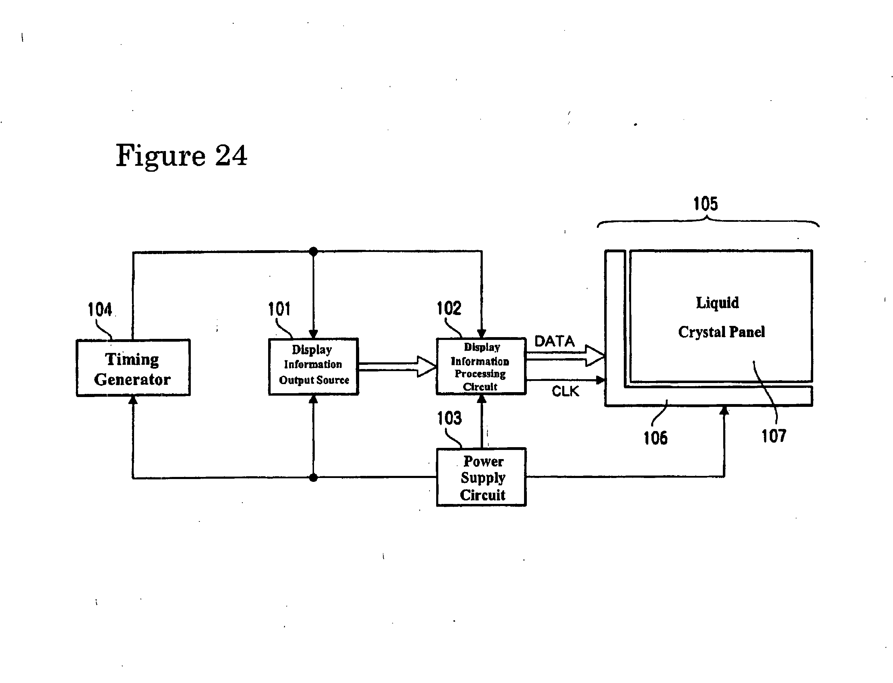

Figure 24 shows an electronic instrument in accordance with an embodiment of the present invention. The electronic instrument includes a display information generator 101, a display information processing circuitry 102, a power supply circuitry 103, a timing generator 104 and a liquid crystal device 105. The liquid crystal device 105 further includes a liquid crystal panel 107 and a driver circuitry 106.

The display information generator 101 includes a memory such as a RAM (random access memory), a storage unit such as various discs, and a synchronizing circuitry for synchronizing digital image signals and others. The display information generator 101 supplies display information such as image signals to the display information processing circuitry 101 in a prescribed format, in accordance with various clock signals that are generated by the timing generator 104.

Next, the display information processing circuitry 102 includes various known circuitries such as amplifying and inverting circuitries, rotation the, gamma correction the, and clamping circuitries. The display information processing circuitry 102 processes display information that has been received, and supplies image signals, together with a clock signal CLK, to the driver circuitry 106. Here, a scanning line driver circuitry (not illustrated), a data line driver circuitry (not illustrated), an inspection circuitry and various other circuitries are collectively referred to as the driver circuitry 106. The power supply circuitry 103 supplies prescribed power voltages to all foregoing components. The liquid crystal device 105 may be, for instance, constituted in the same manner as the liquid crystal device 1 shown in Figure 7.

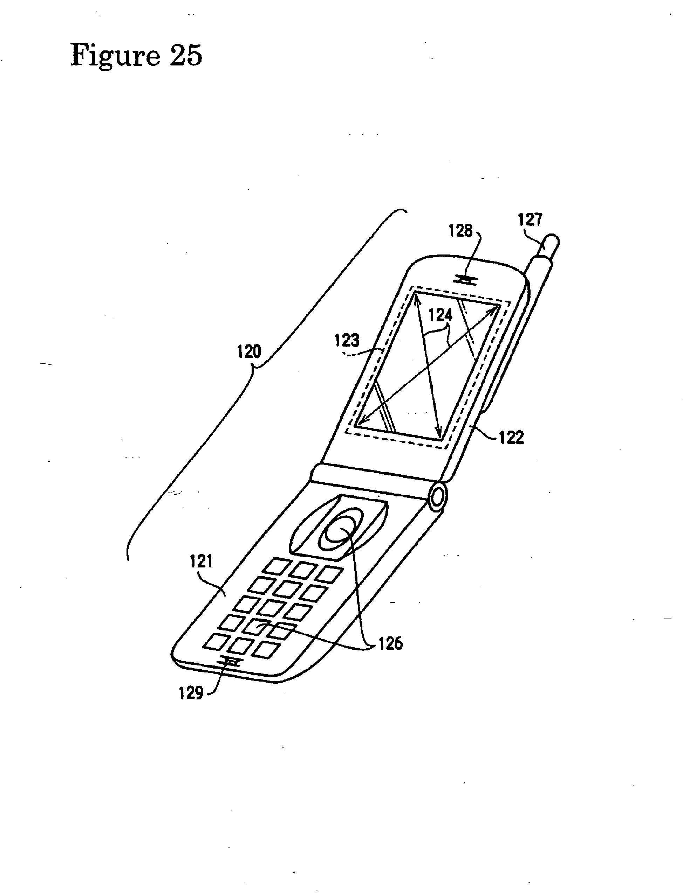

Figure 25 shows a portable telephone set as an example of an electronic instrument in accordance with the embodiment of the present invention. A portable telephone set 120, as shown, includes a main body 121 and a display unit 122. A display device 123 having a liquid crystal device or other electro-optical device in accordance with embodiments described above is disposed within the display unit 122, such that the display unit 122 can display various displays relating to telephone communications at the display screen 124.

An antenna 127 is retractably attached to one end of the display unit 122. A loudspeaker is disposed inside a voice receiver section 128, and a microphone is installed inside a voice transmitter section 129. The control section that controls the operation of the display device 123 is disposed within a main unit 121 or the display unit 122 either integrally with or separately from a control section that controls the entire portable telephone set 120.

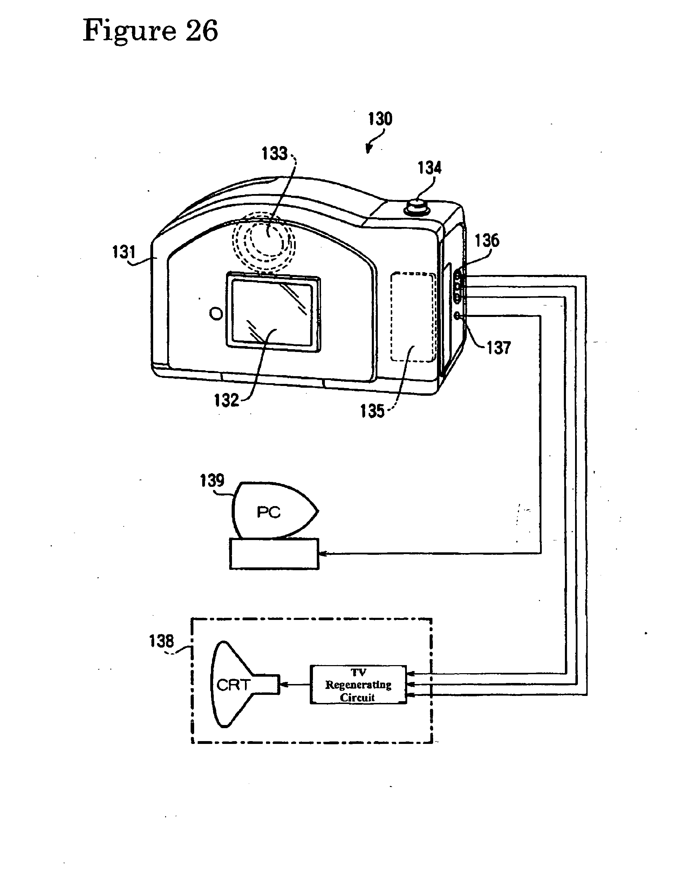

Figure 26 shows a digital camera as another example of the electronic instrument in accordance with the present embodiment of the present invention. The digital camera has a liquid crystal device as a viewfinder. A liquid crystal display unit 132 is disposed on a surface of a case 131. Here, the liquid crystal display unit 132 functions as a viewfinder that displays the object to be photographed. The liquid crystal display unit 132 may be, for instance, a liquid crystal device 1 shown in Figure 7.

The digital camera 130 further includes, on the front side (the back side of the drawing) of the case 131, a light receiving unit 133 having optical lenses and CCD (Charge Coupled Device). When a photographer, having verified an image of the object displayed on the liquid crystal display 132 unit, presses a shutter button 134, the CCD image signal of the particular instant is transferred to and stored in a memory on a circuit substrate 135.

A video signal output terminal 136 and a data communications input-output terminal 137 are disposed on a side surface of the case 131. A television monitor 138 is adapted to be connected to the video signal output terminal 136 as necessary. A personal computer 139 is also adapted to be connected to the data communications input-output terminal 137 as necessary. The image signal stored in a memory on the circuit substrate 135 is sent out to the television monitor 138 or the personal computer 139 through prescribed operations.

### MODIFICATION OF ELECTRONIC DEVICE

In addition to a telephone set and digital camera explained in the foregoing, the present invention is applicable to other electronic instruments such as personal computers, wristwatch type electronic instruments, PDAs (personal digital assistants), liquid crystal television sets, viewfinder type or direct-view monitor type video tape recorders, automobile navigation devices, pagers, electronic notebooks, portable calculators, word processing devices, workstations, television telephone sets, and POS terminal equipments.

The present invention was described above with reference to preferred embodiments, but the present invention is not limited to these embodiments, and various improvements can be made within the scope of the present invention as described in the claims.

The color filter substrate in accordance with the present invention is used to provide a color display function in a liquid crystal device, an organic EL device, or other such electro-optical device. Also, the electro-optical device in accordance with the present invention is preferably used as a display section of a portable phone, a portable information terminal, a PDA, or other such electronic device. Also, the electronic device in accordance with the present invention may be a portable phone, a portable information terminal, a PDA, or another such electronic device, and is particularly configured as an electronic device with a function whereby various data can be visually displayed.

As used herein, the following directional terms "forward, rearward, above, downward, vertical, horizontal, below and transverse" as well as any other similar directional terms refer to those directions of a device equipped with the present invention. Accordingly, these terms, as utilized to describe the present invention should be interpreted relative to a device equipped with the present invention.

The term "configured" as used herein to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-318446.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A color filter substrate, comprising:
a substrate (9a);
a plurality of display dots on the substrate;
a plurality of first strip-shaped banks (15a) for partitioning off the display dots into different colours;
a plurality of second strip-shaped banks (15b);
a reflective film(12) partially provided on the substrate such that a reflective portion and a transmissive portion are formed in each of the display dots; and
coloring elements (16) provided in areas divided by the first banks and the second banks, **characterized in that** each of the plurality of banks intersects with a plurality of the first banks and that the reflective film is provided only within and covering regions bounded by the first and second banks, and the second banks being provided between the reflective portions and the transmissive portions.

2. The color filter substrate according to claim 1, wherein
two adjacent coloring elements that are divided by a said second bank have the same color but different light transmittance rates.

3. The color filter substrate according to claim 1, wherein
two adjacent coloring elements divided by a said second bank have the same color material but have different thicknesses.

4. The color filter substrate according to claim 1, wherein
two adjacent coloring elements divided by a said second bank have different colors and different film thicknesses.

5. The color filter substrate according to claim 1, further comprising
a resin layer (11) provided between the substrate and the reflective film in the areas divided by a said second bank, the resin layer having an irregular portion on its surface.

6. The color filter substrate according to claim 5, wherein
the irregular portion is formed by forming the resin layer using a material containing beads.

7. The color filter substrate according to claim 5, wherein
the irregular portion is formed by wrinkles on the resin layer.

8. The color filter substrate according to claim 1, wherein
the reflective film is formed in the areas partitioned off by the second banks.

9. The color filter substrate according to claim 8, wherein
the reflective film is formed using a material containing beads.

10. A method of manufacturing a color filter substrate, comprising the steps of:
providing a substrate (9a);
forming first (15a) and second (15b) strip-shaped banks on the substrate, the first banks for partitioning off display dots into different colours, and each of the second banks intersecting with a plurality of the first banks;
partially forming a reflective film (12) such that a reflective portion and a transmissive portion are formed in each display dot, the reflective film being formed only within and covering regions bounded by the first and second banks by droplet discharge; and
forming coloring elements (16) on the areas divided by the first and second banks by droplet discharge.

11. The method of manufacturing a color filter substrate according to claim 10, further comprising
forming a resin layer (11) on the substrate such that the resin layer has an irregular portion on its surface,
in the forming of the first and second banks, the first and second banks being formed simultaneously after the forming of the resin layer,
the reflective film being formed by droplet discharge after the forming of the first and second banks, and
the coloring elements being formed after the forming of the reflective film.

12. The method for manufacturing a color filter substrate according to claim 10. further comprising
forming a resin layer on the substrate after the forming of the first and second banks such that the resin layer has an irregular portion on its surface,
in the forming of the first and second banks, the first and second banks being formed simultaneously,
the reflective film being formed by droplet discharge after the forming of the resin layer; and
the coloring elements being formed after the forming of the reflective film.

13. The method for manufacturing a color filter substrate according to claim 10, further comprising
forming a resin layer on the substrate such that the resin layer has an irregular pattern on its surface,
the reflective film being formed after the forming of the resin layer,
in the forming of the first and second banks, the first and second banks being formed simultaneously after the forming of the reflective film,
the coloring elements being formed after the forming of the first and second banks.

14. The method for manufacturing a color filter substrate according to claim 10, wherein
the forming of the first and second banks includes
forming a thermosetting light-blocking film layer with a uniform thickness;
forming a photosensitive ink repellent layer on the light-blocking film layer with a uniform thickness; and
exposing and developing the light-blocking film layer.

15. An electro-optical device comprising:
the color filter substrate according to any of claims 1 to 9; and
a layer of electro-optical material provided on the color filter substrate.

16. An electronic device comprising:
the electro-optical device according to claim 15, and
control means for controlling the operation of the electro-optical device.

## Patentansprüche

1. Farbfiltersubstrat, umfassend:
ein Substrat (9a);
mehrere Anzeigepunkte auf dem Substrat;
mehrere erste streifenförmige Bänke (15a) zum Trennen der Anzeigepunkte in verschiedene Farben;
mehrere zweite streifenförmige Bänke (15b);
einen reflektiven Film (12), der teilweise auf dem Substrat derart bereitgestellt ist, dass ein reflektiver Abschnitt und ein transmissiver Abschnitt in jedem der Anzeigepunkte gebildet sind; und
färbende Elemente (16), die in Flächen bereitgestellt sind, die durch die ersten Bänke und die zweiten Bänke geteilt sind, **dadurch gekennzeichnet, dass** jede der mehreren zweiten Bänke mehrere der ersten Bänke schneidet, und dass der reflektive Film nur innerhalb von Regionen bereitgestellt ist und diese bedeckt, die von den ersten und zweiten Bänken begrenzt sind, und die zweiten Bänke zwischen den reflektiven Abschnitten und den transmissiven Abschnitten bereitgestellt sind.

2. Farbfiltersubstrat nach Anspruch 1, wobei
zwei benachbarte färbende Elemente, die durch eine zweite Bank geteilt sind, dieselbe Farbe aber verschiedene Durchlässigkeitsraten haben.

3. Farbfiltersubstrat nach Anspruch 1, wobei
zwei benachbarte färbende Elemente, die durch eine zweite Bank geteilt sind, dasselbe Farbmaterial aber verschiedene Dicken haben.

4. Farbfiltersubstrat nach Anspruch 1, wobei
zwei benachbarte färbende Elemente, die durch eine zweite Bank geteilt sind, verschiedene Farben und verschiedene Filmdicken haben.

5. Farbfiltersubstrat nach Anspruch 1, des Weiteren umfassend
eine Harzschicht (11), die zwischen dem Substrat und dem reflektiven Film in den Flächen bereitgestellt ist, die durch eine zweite Bank geteilt sind, wobei die Harzschicht einen unregelmäßigen Abschnitt auf ihrer Oberfläche hat.

6. Farbfiltersubstrat nach Anspruch 5, wobei
der unregelmäßige Abschnitt gebildet wird, indem die Harzschicht unter Verwendung eines Materials gebildet wird, das Kügelchen enthält.

7. Farbfiltersubstrat nach Anspruch 5, wobei
der unregelmäßige Abschnitt durch Falten auf der Harzschicht gebildet ist.

8. Farbfiltersubstrat nach Anspruch 1, wobei
der reflektive Film in den Flächen gebildet ist, die durch die zweiten Bänke geteilt sind.

9. Farbfiltersubstrat nach Anspruch 8, wobei
der reflektive Film unter Verwendung eines Materials gebildet wird, das Kügelchen enthält.

10. Verfahren zur Herstellung eines Farbfiltersubstrats, umfassend die folgenden Schritte:
Bereitstellen eines Substrats (9a);
Bilden erster (15a) und zweiter (15b) Bänke auf dem Substrat, wobei die ersten Bänke zum Trennen von Anzeigepunkten in verschiedene Farben dienen, und jede der zweiten Bänke mehrere der ersten Bänke schneidet;
teilweises Bilden eines reflektiven Films (12), so dass ein reflektiver Abschnitt und ein transmissiver Abschnitt in jedem Anzeigepunkt gebildet sind, wobei der reflektive Film durch Tröpfchenabscheidung nur innerhalb von Regionen gebildet ist und diese bedeckt, die von den ersten und zweiten Bänken begrenzt sind; und
Bilden von färbenden Elementen (16) auf den Flächen, die durch die ersten und zweiten Bänke geteilt sind, durch Tröpfchenabscheidung.

11. Verfahren zur Herstellung eines Farbfiltersubstrats nach Anspruch 10, des Weiteren umfassend
Bilden einer Harzschicht (11) auf dem Substrat, so dass die Harzschicht einen unregelmäßigen Abschnitt auf ihrer Oberfläche hat,
bei der Bildung der ersten und zweiten Bänke, die gleichzeitige Bildung der ersten und zweiten Bänke, nachdem die Harzschicht gebildet wurde,
Bilden des reflektiven Films durch Tröpfchenabscheidung nach der Bildung der ersten und zweiten Bänke, und
Bilden der färbenden Elemente nach der Bildung des reflektiven Films.

12. Verfahren zur Herstellung eines Farbfiltersubstrats nach Anspruch 10, des Weiteren umfassend
Bilden einer Harzschicht auf dem Substrat nach der Bildung der ersten und zweiten Bänke, so dass die Harzschicht einen unregelmäßigen Abschnitt auf ihrer Oberfläche hat,
bei der Bildung der ersten und zweiten Bänke die gleichzeitige Bildung der ersten und zweiten Bänke,
Bilden des reflektiven Films durch Tröpfchenabscheidung nach der Bildung der Harzschicht; und
Bilden der färbenden Elemente nach der Bildung des reflektiven Films.

13. Verfahren zur Herstellung eines Farbfiltersubstrats nach Anspruch 10, des Weiteren umfassend
Bilden einer Harzschicht auf dem Substrat, so dass die Harzschicht ein unregelmäßiges Muster auf ihrer Oberfläche hat,
Bilden des reflektiven Films nach der Bildung der Harzschicht,
bei der Bildung der ersten und zweiten Bänke die gleichzeitige Bildung der ersten und zweiten Bänke nach der Bildung des reflektiven Films;
Bilden der färbenden Elemente nach der Bildung der ersten und zweiten Bänke.

14. Verfahren zur Herstellung eines Farbfiltersubstrats nach Anspruch 10, wobei das Bilden der ersten und zweiten Bänke enthält
Bilden eines wärmehärtenden lichtblockierenden Films mit einer gleichförmigen Dicke;
Bilden einer lichtempfindliche Tinte abweisenden Schicht auf der lichtblockierenden Filmschicht mit einer gleichförmigen Dicke; und
Belichten und Entwickeln der lichtblockierenden Filmschicht.

15. Elektro-optische Vorrichtung, umfassend:
das Farbfiltersubstrat nach einem der Ansprüche 1 bis 9; und
eine Schicht aus elektro-optischem Material, die auf dem Farbfiltersubstrat bereitgestellt ist.

16. Elektro-optische Vorrichtung, umfassend:
die elektro-optische Vorrichtung nach Anspruch 15, und
ein Steuermittel zum Steuern des Betriebs der elektrooptischen Vorrichtung.

## Revendications

1. Substrat de filtre coloré, comprenant
un substrat (9a) ;
une pluralité de points d'affichage sur le substrat ;
une pluralité de premières surélévations en forme de bandes (15a) pour partager les points d'affichage en différentes couleurs;
une pluralité de deuxièmes surélévations en forme de bandes (15b) ;
une pellicule réfléchissante (12) partiellement fournie sur le substrat de manière à ce qu'une partie réfléchissante et une partie transmissive soient formées dans chacun des points d'affichage ; et
des éléments de coloration (16) fournis dans des zones divisées par les premières surélévations et les deuxièmes surélévations, **caractérisé en ce que** chacune parmi la pluralité des deuxièmes surélévations croise une pluralité des premières surélévations, et **en ce que** la pellicule réfléchissante est fournie seulement dans, et recouvre des zones délimitées par les premières et deuxièmes surélévations, et les deuxièmes surélévations étant fournies entre les parties réfléchissantes et les parties transmissives.

2. Substrat de filtre coloré selon la revendication 1,
deux éléments de coloration adjacents divisés par une dite deuxième surélévation présentant la même couleur mais des taux de transmission de lumière différents.

3. Substrat de filtre coloré selon la revendication 1,
deux éléments de coloration adjacents divisés par une dite deuxième surélévation présentant la même matière colorée mais des épaisseurs différentes.

4. Substrat de filtre coloré selon la revendication 1,
deux éléments de coloration adjacents divisés par une dite deuxième surélévation présentant des couleurs différentes et des épaisseurs de pellicule différentes.

5. Substrat de filtre coloré selon la revendication 1, comprenant en outre
une couche de résine (11) fournie entre le substrat et la pellicule réfléchissante dans les zones divisées par une dite deuxième surélévation, la couche de résine possédant une partie irrégulière à sa surface.

6. Substrat de filtre coloré selon la revendication 5,
la partie irrégulière étant formée en formant la couche de résine en utilisant une matière contenant des perles.

7. Substrat de filtre coloré selon la revendication 5,
la partie irrégulière étant formée par des plis sur la couche de résine.

8. Substrat de filtre coloré selon la revendication 1,
la pellicule réfléchissante étant formée dans les zones partagées par les deuxièmes surélévations.

9. Substrat de filtre coloré selon la revendication 8,
la pellicule réfléchissante étant formée en utilisant une matière contenant des perles.

10. Procédé de fabrication d'un substrat de filtre coloré, comprenant les étapes suivantes:
fourniture d'un substrat (9a) ;
formation de premières (15a) et deuxièmes (15b) surélévations en forme de bandes sur le substrat, les premières surélévations servant à partager des points d'affichage en différentes couleurs, et chacune des deuxièmes surélévations croisant une pluralité des premières surélévations ;
formation partielle d'une pellicule réfléchissante (12) de manière à ce qu'une partie réfléchissante et une partie transmissive soient formées dans chaque point d'affichage, la pellicule réfléchissante étant formée seulement à l'intérieur de, et recouvrant des zones délimitées par les premières et deuxièmes surélévations grâce au déversement de gouttelettes; et
formation d'éléments de coloration (16) dans les zones divisées par les premières et deuxièmes surélévations grâce au déversement de gouttelettes.

11. Procédé de fabrication d'un substrat de filtre coloré selon la revendication 10, comprenant en outre
la formation d'une couche de résine (11) sur le substrat, de manière à ce que la couche de résine possède une partie irrégulière à sa surface,
lors de la formation des premières et deuxièmes surélévations, les premières et deuxièmes surélévations étant formées simultanément après la formation de la couche de résine,
la pellicule réfléchissante étant formée grâce au déversement de gouttelettes après la formation des premières et deuxièmes surélévations, et
les éléments de coloration étant formés après la formation de la pellicule réfléchissante.

12. Procédé de fabrication d'un substrat de filtre coloré selon la revendication 10, comprenant en outre
la formation d'une couche de résine sur le substrat après la formation des premières et deuxièmes surélévations, de manière à ce que la couche de résine possède une partie irrégulière à sa surface,
lors de la formation des premières et deuxièmes surélévations, les premières et deuxièmes surélévations étant formées simultanément,
la pellicule réfléchissante étant formée grâce au déversement de gouttelettes après la formation de la couche de résine ; et
les éléments de coloration étant formés après la formation de la pellicule réfléchissante.

13. Procédé de fabrication d'un substrat de filtre coloré selon la revendication 10, comprenant en outre
la formation d'une couche de résine sur le substrat, de manière à ce que la couche de résine présente un motif irrégulier à sa surface,
la pellicule réfléchissante étant formée après la formation de la couche de résine,
lors de la formation des premières et deuxièmes surélévations, les premières et deuxièmes surélévations étant formées simultanément après la formation de la pellicule réfléchissante,
les éléments de coloration étant formés après la formation des premières et deuxièmes surélévations.

14. Procédé de fabrication d'un substrat de filtre coloré selon la revendication 10,
la formation des premières et deuxièmes surélévations incluant :
la formation d'une couche de pellicule de blocage de lumière thermodurcissable d'une épaisseur uniforme ;
la formation d'une couche repoussant l'encre photosensible sur la couche de pellicule de blocage de lumière avec une épaisseur uniforme ; et
l'exposition et le développement de là couche de pellicule de blocage de lumière.

15. Dispositif électro-optique comprenant:
le substrat de filtre coloré selon l'une quelconque des revendications 1 à 9 ; et
une couche de matière électro-optique fournie sur le substrat de filtre coloré.

16. Dispositif électronique comprenant :
le dispositif électro-optique selon la revendication 15, et
un moyen de commande pour commander le fonctionnement du dispositif électro-optique.
